# EUROPÄISCHE PATENTSCHRIFT

(11) **EP 2 746 731 B1**
(45) Veröffentlichungstag und Bekanntmachung des Hinweises auf die Patenterteilung: **25.03.2020**
(21) Anmeldenummer: 13194826.7
(22) Anmeldetag: 28.11.2013
(51) Int. Cl.: G01B 11/00, G01D 5/38

(54) **Optische Positionsmesseinrichtung**
Optical position measurement device
Dispositif optique de mesure de la position

(30) Priorität: 20.12.2012 DE 102012223887
(43) Veröffentlichungstag der Anmeldung: 25.06.2014
(73) Patentinhaber: Dr. Johannes Heidenhain GmbH, 83301 Traunreut (DE)
(72) Erfinder: Meissner, Markus, 83236 Übersee (DE); Holzapfel, Wolfgang, 83119 Obing (DE)

(56) Entgegenhaltungen:
- EP-A2- 1 762 828
- WO-A2-2011/126610
- US-A- 5 104 225
- US-A1- 2012 032 067

## Beschreibung

Die vorliegende Erfindung betrifft eine optische Positionsmesseinrichtung zur Erfassung der Position eines Objektes in mehreren räumlichen Freiheitsgraden.

In Maschinen, die bei der Fertigung und Prüfung von Halbleiterbauelementen zum Einsatz kommen, besteht oftmals die Anforderung Objekte präzise zu positionieren. Hierbei kann es sich etwa um einen Wafer handeln, der hochgenau unterhalb eines Werkzeugs einer Belichtungs- oder Inspektionseinheit zu positionieren ist. Der Wafer liegt dabei auf einem in sechs Freiheitsgraden beweglichen Tisch, der über ein oder mehrere entsprechenden Antriebe bewegt wird. Als Objekt, dessen Position hochgenau zu erfassen ist, fungiert hier also der Tisch. Um diesen Tisch über eine zugehörige Steuereinheit zu positionieren, ist die Erzeugung von Positionssignalen bezüglich der räumlichen Lage des Tisches mittels hochgenauer Positionsmesseinrichtungen erforderlich.

Als geeignet erweisen sich hierzu insbesondere optische Positionsmesseinrichtungen wie Interferometer, gitterbasierte optische Positionsmesseinrichtungen oder Kombinationen derartiger Einrichtungen.

Um die räumliche Position des Objekts in mehreren Freiheitsgraden mittels Interferometern genau zu bestimmen, ist z.B. aus der US 6,020,964 bekannt, das Objekt von mindestens zwei Seiten her optisch anzutasten. An zwei Seiten des Objektes bzw. Tisches sind Reflektoren angeordnet, auf die mehrere Messstrahlenbündel zugehöriger Interferometer-Messarme einfallen. Pro Seite kommen hierbei sog. Mehrachs-Interferometer mit mehreren Messstrahlenbündeln bzw. Messarmen zum Einsatz, um auch Rotationsbewegungen des Objekts um die verschiedenen Bewegungsrichtungen erfassen zu können. Die mindestens zwei Antastrichtungen sind üblicherweise orthogonal zueinander orientiert, so dass darüber die Bewegung des Objekts in derjenigen Ebene erfassbar ist, die durch die beiden Bewegungsrichtungen aufgespannt wird. Eventuelle Bewegungen des Objekts in einer hierzu senkrechten Bewegungsrichtung können über geeignet umgelenkte Messstrahlenbündel erfasst werden, die an Reflektoren oberhalb des Objekts wieder zurückreflektiert werden. Hierzu sind geeignete Umlenkspiegel am Objekt anzuordnen. Problematisch an dieser Lösung ist jedoch, dass das Objekt mindestens über zwei Seiten optisch angetastet werden muss; diese beiden Seiten müssen für die Messstrahlenbündel demzufolge möglichst frei zugänglich sein. Dies kann jedoch nicht in allen Anwendungen konstruktiv sichergestellt werden. Hinzu kommt der für die Umlenkung erforderliche Umlenkspiegel am Objekt, der zum einen die bewegte Masse des Objekts vergrößert und zum anderen nur recht aufwändig in der erforderlichen Genauigkeit herstellbar ist.

In der DE 10 2012 201 393.8 der Anmelderin ist bereits eine Lösung zur Erfassung der Position eines Objektes in mehreren räumlichen Freiheitsgraden vorgeschlagen geworden, bei der eine optische Antastung des Objekts lediglich aus einer einzigen Richtung vorgesehen ist. Damit entfallen die Einschränkungen der oben diskutierten Lösung mit mehreren erforderlichen Antastrichtungen, es ist jedoch eine relativ aufwändige Verrechnung der Positionssignale verschiedener Messungen erforderlich, um die Bewegung des Objekts in den insgesamt sechs Freiheitsgraden zu bestimmen.

Aus der US 2012/0032067 A1 ist eine interferentielle optische Positionsmesseinrichtung bekannt, die eine Positionsbestimmung entlang zweier zueinander senkrechter Messrichtungen mit Hilfe eines abgetasteten Kreuzgitters ermöglicht. Abtastseitig sind als Retroreflektorelemente mehrere Umlenkprismen vorgesehen, die relativ groß bauen und demzufolge die Abmessungen der Positionsmesseinrichtung vergrößern. Zudem ist eine aufwändige Relativjustierung dieser Prismen im Montageprozess erforderlich, um eine korrekte Abtaststrahlengangführung sicherzustellen.

Gitterbasierte, interferentielle optische Positionsmesseinrichtungen sind desweiteren aus den Druckschriften EP 1 762 828 A2, WO 2011/126610 A2 und US 5,104,225 bekannt. Die darin vorgeschlagenen Systeme sind jedoch nicht dazu geeignet, mittels einer kompakt ausgestalteten Anordnung die Position eines beweglichen Objekts entlang mindestens zweier Bewegungsfreiheitsgrade zu erfassen.

Aufgabe der vorliegenden Erfindung ist es, eine optische Positionsmesseinrichtung zur Erfassung der Position eines Objektes in mindestens zwei räumlichen Freiheitsgraden anzugeben, die eine optische Antastung des Objekts von lediglich einer Seite her erfordert. Hierbei sollte insbesondere eine möglichst direkte und einfache Positionserfassung des Objekts in mindestens zwei räumlichen Freiheitsgraden gewährleistet sein.

Diese Aufgabe wird gelöst durch eine Positionsmesseinrichtung mit den Merkmalen des Anspruches 1.

Vorteilhafte Ausführungsformen der erfindungsgemäßen Positionsmesseinrichtung finden sich in den abhängigen Ansprüchen.

Die erfindungsgemäße optische Positionsmesseinrichtung dient zur Erfassung der Position eines Objekts in mehreren Freiheitsgraden, wobei das Objekt mindestens entlang einer ersten Bewegungsrichtung und entlang einer zweiten Bewegungsrichtung beweglich angeordnet ist. Die Positionsmesseinrichtung umfasst mindestens eine Lichtquelle, mindestens eine am Objekt angeordnete erste Maßverkörperung, die sich entlang einer ersten Erstreckungsrichtung erstreckt und entlang der ersten Erstreckungsrichtung periodisch angeordnete Teilungsbereiche aufweist sowie mindestens eine am Objekt angeordnete zweite Maßverkörperung, die sich entlang einer zweiten Erstreckungsrichtung erstreckt und entlang der zweiten Erstreckungsrichtung periodisch angeordnete Teilungsbereiche aufweist. Ferner umfasst die Positionsmesseinrichtung eine Abtastplatte, in die mindestens erste und zweite Retroreflektorelemente integriert sind, wobei sich das erste Retroreflektorelement parallel zur ersten Erstreckungsrichtung und das zweite Retroreflektorelement parallel zur zweiten Erstreckungsrichtung erstreckt und über die Teilstrahlenbündel, die von der ersten und zweiten Maßverkörperung her darauf einfallen, eine Rückreflexion in Richtung der jeweiligen Maßverkörperung erfahren. Mittels einer Detektoranordnung sind aus überlagerten Teilstrahlenbündeln mindestens Positionssignale bezüglich der Bewegung des Objekts entlang der ersten und zweiten Bewegungsrichtung erzeugbar.

Die Retroreflektorelemente sind als diffraktive Retroreflektorelemente ausgebildet, wobei
- mehrere diffraktive Elemente auf einer ersten Seite der Abtastplatte angeordnet sind und
- mindestens ein Reflektorelement auf der gegenüberliegenden zweiten Seite der Abtastplatte angeordnet ist, dessen reflektierende Seite in Richtung der diffraktiven Elemente orientiert ist und wobei sich das Reflektorelement parallel zur ersten oder zweiten Erstreckungsrichtung erstreckt.

Es kann vorgesehen werden, dass pro Retroreflektorelement vier diffraktive Elemente auf einer ersten Seite der Abtastplatte angeordnet sind, so dass ein von einem ersten Auftreffort der zugehörigen Maßverkörperung einfallendes Paar von Teilstrahlenbündeln zunächst erste und zweite diffraktive Elemente durchtritt und darüber jeweils eine Fokussierung und Ablenkung auf das Reflektorelement auf der gegenüberliegenden zweiten Seite der Abtastplatte erfährt, am Reflektorelement eine Rückreflexion der beiden Teilstrahlenbündel auf ein drittes und viertes diffraktives Element erfolgt, über die die durchtretenden Teilstrahlenbündel jeweils eine Kollimation und Ablenkung in Richtung eines zweiten Auftrefforts auf der zugehörigen Maßverkörperung erfahren.

Vorzugsweise sind die diffraktiven Elemente als auf der ersten Seite der Abtastplatte angeordnete, lokal begrenzte Transmissionsgitter mit gekrümmten Gitterlinien ausgebildet.

Desweiteren ist es möglich, dass in die Abtastplatte ein drittes Retroreflektorelement integriert ist, welches sich parallel zur zweiten Erstreckungsrichtung erstreckt und über das Teilstrahlenbündel, die von der zweiten Maßverkörperung her darauf einfallen, eine Rückreflexion in Richtung der zweiten Maßverkörperung erfahren.

Mit Vorteil sind die erste und zweite Maßverkörperung jeweils als Reflexionsgitter ausgebildet und die Teilungsbereiche der ersten und zweiten Maßverkörperung senkrecht zueinander orientiert.

Hierbei kann auch vorgesehen werden, dass die erste und zweite Maßverkörperung überlagert miteinander in Form eines Kreuzgitters ausgebildet sind.

In einer möglichen Ausführungsform der der erfindungsgemäßen optischen Positionsmesseinrichtung umfasst diese ferner
- mindestens einen am Objekt angeordneten Messreflektor,
- mindestens ein, mit der Abtastplatte mechanisch gekoppeltes Strahlteilerelement, um ein darauf einfallendes Strahlenbündel in mindestens ein Messstrahlenbündel und mindestens ein Referenzstrahlenbündel aufzuspalten, so dass über das in Richtung der Messreflektoren propagierende Messstrahlenbündel mindestens ein Interferometer-Messarm ausgebildet wird und über das Referenzstrahlenbündel ein Interferometer-Referenzarm,
- eine Interferometer-Detektoranordnung, über die aus überlagerten Mess- und Referenzstrahlenbündeln Positionssignale bezüglich der Bewegung des Objekts entlang einer dritten Bewegungsrichtung erzeugbar sind, die senkrecht zur ersten und zweiten Bewegungsrichtung orientiert ist.

In einer derartigen Ausführungsform kann vorgesehen werden, dass das Strahlteilerelement, mehrere diffraktive Elemente und mindestens ein Reflektorelement in die Abtastplatte integriert ausgebildet sind, so dass das Referenzstrahlenbündel zwischen der Aufspaltung am Strahlteilerelement und der Überlagerung mit dem Messstrahlenbündel ausschließlich in der Abtastplatte propagiert.

Ferner kann dabei der Messreflektor ein diffraktives Element und ein Reflektorelement umfassen.

Mit Vorteil propagieren hierbei mindestens drei symmetrisch zueinander angeordnete Messstrahlenbündel in Richtung des mindestens einen Messreflektors.

Es ist desweiteren möglich, dass eine einzige Lichtquelle mindestens zur Abtastung der ersten und zweiten Maßverkörperung genutzt wird.

In einer Ausführungsform der erfindungsgemäßen optischen Positionsmesseinrichtung ist vorgesehen, dass die erste Bewegungsrichtung parallel zur ersten Erstreckungsrichtung orientiert ist und die zweite Bewegungsrichtung parallel zur zweiten Erstreckungsrichtung orientiert ist.

In einer weiteren Ausführungsform der erfindungsgemäßen optischen Positionsmesseinrichtung ist über mindestens ein Aufspaltelement zumindest ein Teil der Teilstrahlenbündel auf ein positionsempfindliches elektrooptisches Detektorelement lenkbar und über die Detektion des Auftreffortes der darauf einfallenden Teilstrahlenbündel die Position des Objekts bei einer Rotation um mindestens eine Bewegungsrichtung bestimmbar.

Hierbei kann auch vorgesehen werden, dass die erste Bewegungsrichtung einen Winkel von zur ersten Erstreckungsrichtung einnimmt und die zweite Bewegungsrichtung einen Winkel von 45° zur zweiten Erstreckungsrichtung einnimmt.

Über die erfindungsgemäßen Maßnahmen ist nunmehr eine Erfassung einer Objektposition in mindestens zwei räumlichen Freiheitsgraden möglich, wobei die hierzu erforderliche optische Antastung aus lediglich einer einzigen Richtung erfolgt. Dadurch muss nur noch eine einzige Seite des Objekts für die erforderliche optische Antastung zugänglich sein. Es resultieren somit erweiterte konstruktive Möglichkeiten, wenn das entsprechende Objekt etwa als in zwei oder mehr Freiheitsgraden positionierbarer Tisch in einer Maschine ausgebildet ist.

Im Vergleich zur oben diskutierten Interferometer-Lösung entfällt in der erfindungsgemäßen optischen Positionsmesseinrichtung auch die Notwendigkeit schwere und aufwändig zu fertigende Umlenkspiegel am Objekt anzuordnen. Es ist ausreichend, mindestens zwei Maßverkörperungen mit geeignet ausgebildeten Teilungen bzw. Gittern dort anzuordnen. Wenn diese z.B. als Linearteilungen in geeigneter Form in eine plan-parallele Platte integriert werden, können diese einfach und kostengünstig hergestellt werden, ferner erhöht sich dadurch die Masse des bewegten Objekts nur geringfügig.

Über die erfindungsgemäßen Maßnahmen resultiert ein i.w. zweiteiliges System, bei dem neben den Maßverkörperungen am Objekt als optisch funktionsrelevante Komponente nur noch eine Abtastplatte vorgesehen ist. Zur Lichtzuführung sowie zur Zuführung der interferierend überlagerten Teilstrahlenbündel zu einer Detektoranordnung können Lichtwellenleiter genutzt werden, wodurch eine Anordnung von Lichtquelle und Detektoranordnung räumlich entfernt von den Maßverkörperungen und der Abtastplatte möglich ist.

Insbesondere die Integration aller optisch relevanten Elemente in die Abtastplatte ermöglicht die Realisierung eines ausgesprochen kompakten Systems. Hierbei lässt sich in einer besonders vorteilhaften Ausführungsform ein Gesamtsystem aufbauen, das aus einer Kombination gitterbasierter optischer Positionsmesseinrichtungen und ein oder mehreren interferometrischen Positionsmesseinrichtungen besteht.

Je nach Messanforderung können über die entsprechend ausgelegte erfindungsgemäße optische Positionsmesseinrichtung bis zu alle sechs räumlichen Freiheitsgrade eines Objekts direkt messtechnisch mit der erforderlichen Genauigkeit erfasst werden. Es entfällt grundsätzlich die Notwendigkeit kombinierter Messungen entlang mehrerer Bewegungsrichtungen.

Sollte ggf. keine höchstpräzise Positionserfassung in allen sechs räumlichen Freiheitsgraden in der jeweiligen Anwendung erforderlich sein, so können basierend auf den erfindungsgemäßen Überlegungen auch einfacher aufgebaute optische Positionsmesseinrichtungen realisiert werden.

Weitere Einzelheiten und Vorteile der vorliegenden Erfindung seien anhand der nachfolgenden Beschreibung von Ausführungsbeispielen in Verbindung mit den Figuren erläutert.

Es zeigt
- Figur 1: eine schematisierte perspektivische Teil-Ansicht eines ersten Ausführungsbeispiels der erfindungsgemäßen optischen Positionsmesseinrichtung;
- Figur 2a: eine schematisierte Darstellung eines Teil-Abtaststrahlengangs des ersten Ausführungsbeispiels der erfindungsgemäßen optischen Positionsmesseinrichtung zwischen Lichtquelle und Retroreflektorelement;
- Figur 2b: eine schematisierte Darstellung eines Teil-Abtaststrahlengangs des ersten Ausführungsbeispiels der erfindungsgemäßen optischen Positionsmesseinrichtung zwischen Retroreflektorelement und Detektoranordnung;
- Figur 2c: eine Darstellung des Abtaststrahlengangs zur Erfassung der Objektbewegung entlang einer ersten Bewegungsrichtung im ersten Ausführungsbeispiel der erfindungsgemäßen optischen Positionsmesseinrichtung;
- Figur 3a: eine schematisierte Darstellung eines weiteren Teil-Abtaststrahlengangs des ersten Ausführungsbeispiels der erfindungsgemäßen optischen Positionsmesseinrichtung zwischen Lichtquelle und Retroreflektorelement;
- Figur 3b: eine schematisierte Darstellung des weiteren Teil-Abtaststrahlengangs des ersten Ausführungsbeispiels der erfindungsgemäßen optischen Positionsmesseinrichtung zwischen Retroreflektorelement und Detektoranordnung;
- Figur 3c: eine Darstellung des Abtaststrahlengangs zur Erfassung der Objektbewegung entlang einer zweiten Bewegungsrichtung im ersten Ausführungsbeispiel der erfindungsgemäßen optischen Positionsmesseinrichtung;
- Figur 4: eine Draufsicht auf die am Objekt angeordneten Maßverkörperungen des ersten Ausführungsbeispiels der erfindungsgemäßen optischen Positionsmesseinrichtung;
- Figur 5: eine Draufsicht auf die dem Objekt zugewandte Seite der Abtastplatte des ersten Ausführungsbeispiels der erfindungsgemäßen optischen Positionsmesseinrichtung;
- Figur 6: eine schematisierte perspektivische Ansicht eines zweiten Ausführungsbeispiels der erfindungsgemäßen optischen Positionsmesseinrichtung;
- Figur 7a-c: jeweils eine Darstellung zur Erläuterung eines im zweiten Ausführungsbeispiel zusätzlich vorgesehenen Interferometer-Strahlengangs;
- Figur 8: eine Draufsicht auf die dem Messreflektor zugewandte Seite der Abtastplatte mit für den zusätzlichen Interferometer-Strahlengang vorgesehenen Elementen;
- Figur 9: eine Draufsicht auf die dem Messreflektor abgewandte Seite der Abtastplatte mit für den zusätzlichen Interferometer-Strahlengang vorgesehenen Elementen;
- Figur 10: eine Draufsicht auf die der Abtastplatte zugewandte Seite des im Interferometer-Strahlengang genutzten Messreflektors;
- Figur 11: eine schematisierte perspektivische Ansicht eines dritten Ausführungsbeispiels der erfindungsgemäßen optischen Positionsmesseinrichtung;
- Figur 12: eine Draufsicht auf die den Maßverkörperungen zugewandte Seite der Abtastplatte des dritten Ausführungsbeispiels der erfindungsgemäßen optischen Positionsmesseinrichtung;
- Figur 13: eine schematisierte Darstellung eines Teil-Abtaststrahlengangs eines dritten Ausführungsbeispiels der erfindungsgemäßen optischen Positionsmesseinrichtung;
- Figur 14a-14d: jeweils Darstellungen zur Erläuterung der Erfassung rotatorischer Bewegungsfreiheitsgrade mittels des dritten Ausführungsbeispiels der erfindungsgemäßen optischen Positionsmesseinrichtung;
- Figur 15: eine schematisierte Darstellung einer weiteren Variante des dritten Ausführungsbeispiels der erfindungsgemäßen optischen Positionsmesseinrichtung.

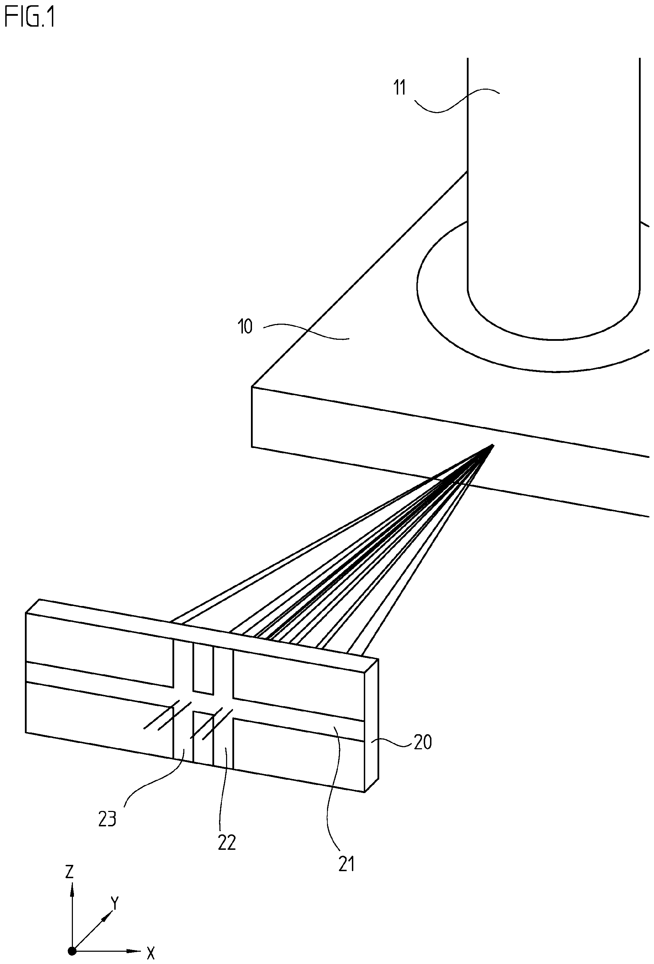

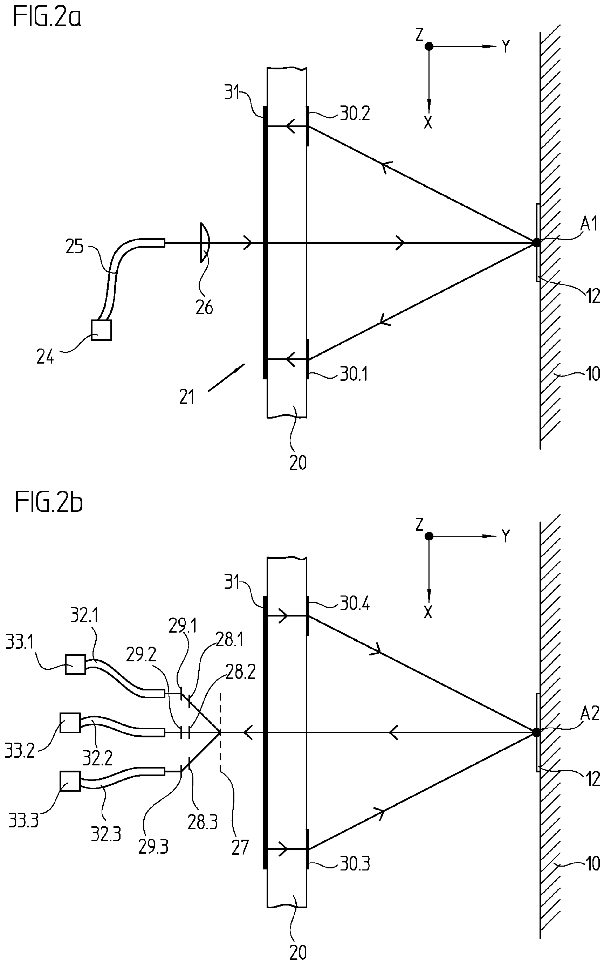

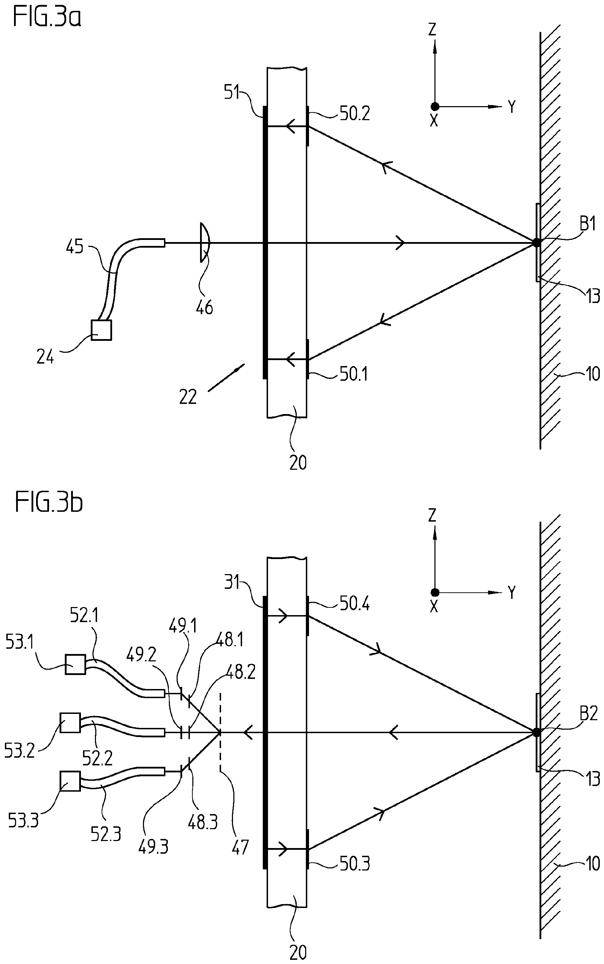

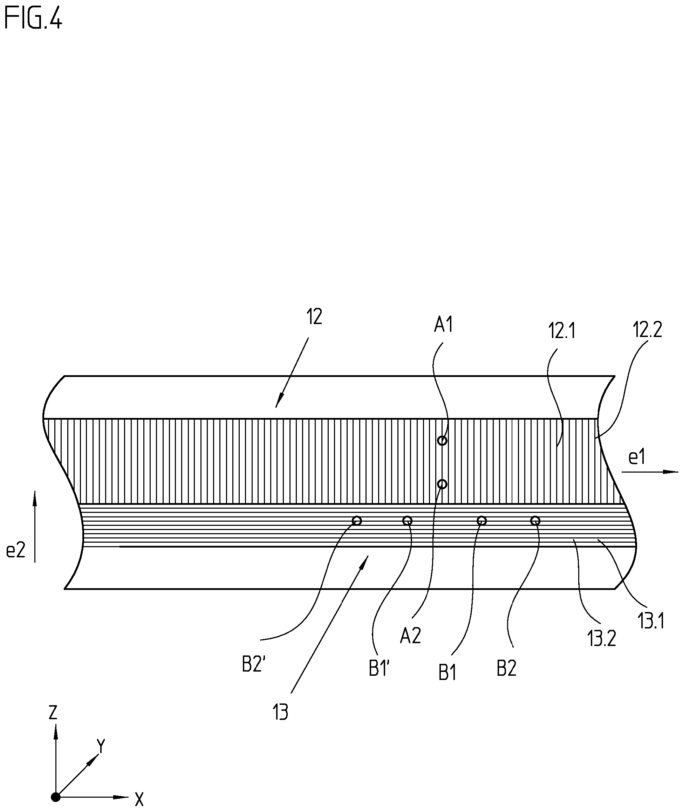

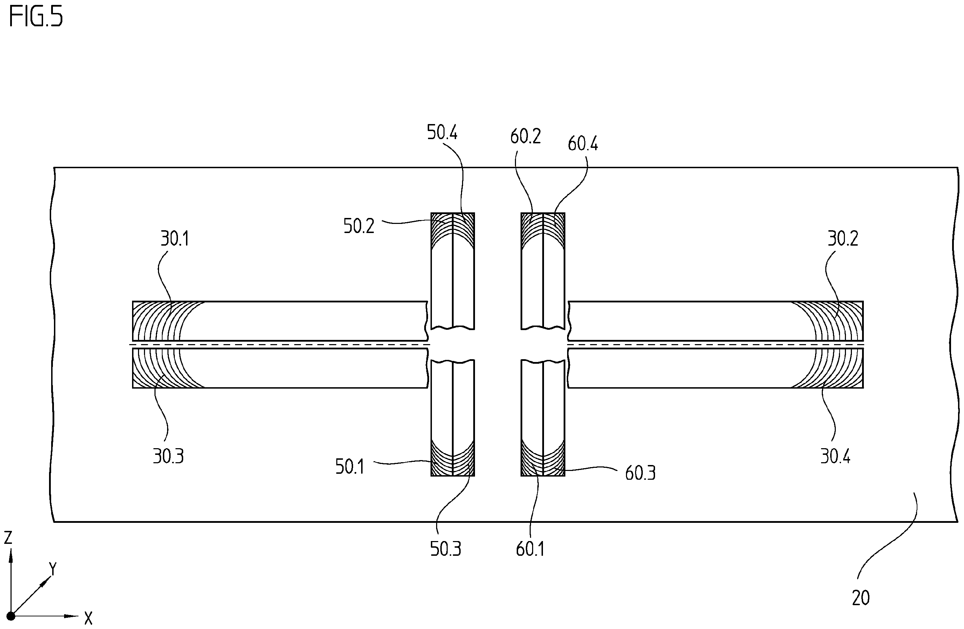

Anhand der Figuren 1 - 5 sei nachfolgend ein erstes Ausführungsbeispiel der erfindungsgemäßen optischen Positionsmesseinrichtung erläutert. Diese ermöglicht die Erfassung der Position eines Objekts 10 in mehreren räumlichen Freiheitsgraden. Figur 1 zeigt eine stark schematisierte, perspektivische Teil-Darstellung der Positionsmesseinrichtung, die Figuren 2a - 2c sowie 3a - 3c jeweils Teil-Abtaststrahlengänge, Figur 4 eine Draufsicht auf die am Objekt 10 angeordneten Maßverkörperungen und Figur 5 eine Draufsicht auf eine Seite der Abtastplatte 20.

Mit Hilfe des ersten Ausführungsbeispiels der erfindungsgemäßen optischen Positionsmesseinrichtung ist die Positionserfassung eines beweglich angeordneten Objekts 10 in drei räumlichen Freiheitsgraden möglich. Hierbei handelt es sich um die Erfassung von Linear-Bewegungen des Objekts 10 entlang einer ersten Bewegungsrichtung x und entlang einer zweiten Bewegungsrichtung z sowie um die Erfassung von RotationsBewegungen des Objekts 10 um eine dritte Bewegungsrichtung y. Die erste und zweite Bewegungsrichtung x und z des Objekts 10 sind im dargestellten Ausführungsbeispiel wie aus Figur 1 ersichtlich orthogonal zueinander orientiert; wiederum orthogonal auf die beiden Bewegungsrichtungen x, z ist vorliegend die dritte Bewegungsrichtung y des Objekts 10 orientiert.

Als bewegliches Objekt 10 fungiert im vorliegenden Beispiel ein schematisiert angedeuteter Tisch einer Halbleiter-Fertigungsmaschine. Mittels nicht dargestellter Antriebe kann dieser Tisch in mehreren räumlichen Freiheitsgraden gegenüber stationären Maschinenkomponenten, z.B. einem in der Figur angedeuteten Werkzeug 11, positioniert werden. Über die erfindungsgemäße optische Positionsmesseinrichtung werden Positionssignale bezüglich der räumlichen Lage des Tisches erzeugt und einer nicht gezeigten Steuereinheit zur Weiterverarbeitung, insbesondere zur Ansteuerung der Antriebe, zur Verfügung gestellt.

Die erfindungsgemäße optische Positionsmesseinrichtung umfasst zum einen - wie aus Figur 4 ersichtlich - zwei am Objekt 10 angeordnete Maßverkörperungen 12, 13. Die beiden Maßverkörperungen 12, 13 sind im dargestellten Beispiel als Reflexionsgitter ausgebildet, beispielsweise als Reflexions-Phasengitter oder als Reflexions-Amplitudengitter, und bestehen jeweils aus entlang einer ersten Erstreckungsrichtung e1 bzw. entlang einer zweiten Erstreckungsrichtung e2 periodisch angeordneten Teilungsbereichen 12.1, 12.2 bzw. 13.1, 13.2. Die Teilungsbereiche 12.1, 12.2 bzw. 13.1, 13.2 besitzen jeweils unterschiedliche Reflexionseigenschaften auf die darauf einfallenden Strahlenbündel. Die Erstreckungsrichtungen e1 und e2 der beiden Maßverkörperungen 12, 13 sind im vorliegenden Ausführungsbeispiel senkrecht zueinander orientiert, außerdem ist die erste Erstreckungsrichtung e1 parallel zur ersten Bewegungsrichtung x orientiert und die zweite Erstreckungsrichtung e2 parallel zur zweiten Bewegungsrichtung z.

Desweiteren umfasst die erfindungsgemäße optische Positionsmesseinrichtung eine Abtastplatte 20 aus Glas, in die mehrere Retroreflektorelemente 21, 22, 23 integriert sind. Im dargestellten Ausführungsbeispiel sind insgesamt drei Retroreflektorelemente 21 - 23 vorgesehen. Ein erstes Retroreflektorelement 21 erstreckt sich parallel zur ersten Erstreckungsrichtung e1 der ersten Maßverkörperung 12, ein zweites Retroreflektorelement 22 erstreckt sich parallel zur zweiten Erstreckungsrichtung e2 der zweiten Maßverkörperung 13. Desweiteren ist vorliegend ein drittes Retroreflektorelement 23 in die Abtastplatte 20 integriert, das sich wie das zweite Retroreflektorelement 22 parallel zur zweiten Erstreckungsrichtung e2 in der Abtastplatte 20 erstreckt. Über die verschiedenen Retroreflektorelemente 21, 22, 23 erfolgt jeweils eine Rückreflexion der Teilstrahlenbündel, die von der ersten und zweiten Maßverkörperung 12, 13 her darauf einfallen, zurück in Richtung der jeweiligen Maßverkörperung 12, 13. Hinsichtlich der detaillierten Abtaststrahlengänge sei auf die nachfolgende Beschreibung der Figuren 2a - 2c sowie 3a - 3c verwiesen.

Die erfindungsgemäße optische Positionsmesseinrichtung weist ferner noch eine Lichtquelle sowie eine Detektoranordnung auf, die in der schematisierten Darstellung von Figur 1 ebenso wie die einzelnen Maßverkörperungen jedoch nicht gezeigt sind. Über die Detektoranordnung sind hierbei aus den überlagerten Teilstrahlenbündeln mindestens Positionssignale bezüglich der Objektbewegung entlang der ersten und zweiten Bewegungsrichtung x, z erzeugbar.

Anhand der Figuren 2a - 2c wird der Abtaststrahlengang im dargestellten ersten Ausführungsbeispiel der erfindungsgemäßen optischen Positionsmesseinrichtung erläutert, über den verschiebungsabhängige Positionssignale bezüglich der Objektbewegung entlang der ersten Bewegungsrichtung x erzeugbar sind. Hierzu wird das von einer Lichtquelle 24 emittierte Strahlenbündel zunächst in einen Lichtwellenleiter 25 eingekoppelt. Als Lichtquelle 24 kommen hierbei verschiedenste Laser in Betracht, wie z.B. Halbleiterlaser, Gaslaser, External Cavity Laser, Faserlaser etc.. Dem auskoppelseitigen Ende des Lichtwellenleiters 25 ist eine Kollimationsoptik 26 nachgeordnet, über die das Strahlenbündel kollimiert wird, welches den Lichtwellenleiter 25 verlässt. Das kollimierte Strahlenbündel durchtritt anschließend einen optisch nicht-wirksamen Bereich der Abtastplatte 20, beispielsweise eine Bohrung oder einen transparenten Bereich, und trifft an einem ersten Auftreffort A1 ein erstes Mal auf die erste Maßverkörperung 12 am Objekt 10. An der ersten Maßverkörperung 12 erfolgt wie aus Figur 2a ersichtlich in der xy-Ebene eine Aufspaltung des einfallenden Strahlenbündels in zwei Teilstrahlenbündel, die in dieser Ebene in Richtung der Abtastplatte 20 zurückreflektiert werden.

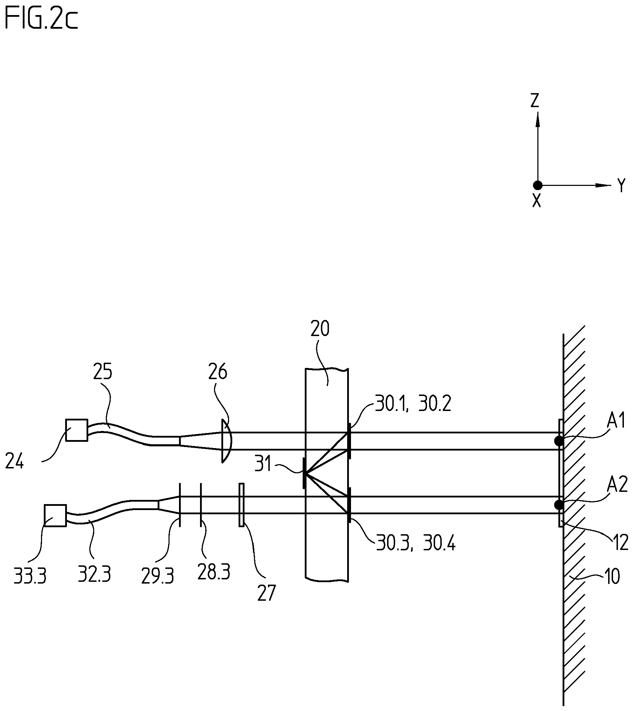

Auf Seiten der Abtastplatte 20 werden über das darin integrierte erste Retroreflektorelement 21 die Teilstrahlenbündel in Richtung eines zweiten Auftreffortes A2 auf der ersten Maßverkörperung 12 zurückreflektiert. Gemäß Figur 2c bzw. Figur 4 ist der zweite Auftreffort A2 entlang der z-Richtung beabstandet zum ersten Auftreffort A1 angeordnet.

Das erste Retroreflektorelement 21 in der Abtastplatte 20 ist wie auch die anderen Retroreflektorelemente 22, 23 als diffraktives Retroreflektorelement ausgebildet und umfasst mehrere diffraktive Elemente 30.1 - 30.4 sowie mindestens ein Reflektorelement 31. Die diffraktiven Elemente 30.1 - 30.4 sind hierbei auf einer ersten Seite der Abtastplatte 20 angeordnet, die in Richtung der ersten Maßverkörperung 12 orientiert ist. Im vorliegenden Ausführungsbeispiel sind die diffraktiven Elemente 30.1 - 30.4 als lokal begrenzte Transmissionsgitter mit gekrümmten Gitterlinien ausgebildet. Das sich parallel zur ersten Erstreckungsrichtung e1 erstreckende, rechteckförmige Reflektorelement 31 ist auf der gegenüberliegenden, zweiten Seite der Abtastplatte 20 angeordnet, wobei dessen reflektierende Seite in Richtung der diffraktiven Elemente 30.1 - 30.4 orientiert ist.

Die vom ersten Auftreffort A1 der ersten Maßverkörperung 12 einfallenden Teilstrahlenbündel durchtreten wie aus Figur 2a ersichtlich in der Abtastplatte 20 zunächst erste und zweite diffraktive Elemente 30.1, 30.2 des ersten Retroreflektorelements 21. Sie erfahren über die entsprechend dimensionierten Gitter dabei zum einen eine Ablenkung entlang der zweiten Erstreckungsrichtung e2 sowie zum anderen eine Fokussierung auf das Reflektorelement 31 entlang der ersten Erstreckungsrichtung e1; in Bezug auf diese optischen Wirkungen der diffraktiven Elemente 30.1, 30.2 sei etwa auch auf die Ansicht des Abtaststrahlengangs in Figur 2c verwiesen. Am Reflektorelement 31 werden die Teilstrahlenbündel zurückreflektiert und durchtreten dann wie aus Figur 2b ersichtlich dritte und vierte diffraktive Elemente 30.3, 30.4 auf der ersten Seite der Abtastplatte 20. Über die dritten und vierten diffraktiven Elemente 30.3, 30.4 werden die durchtretenden Teilstrahlenbündel jeweils kollimiert und in Richtung eines zweiten Auftreffortes A2 auf der ersten Maßverkörperung 12 abgelenkt. Am zweiten Auftreffort A2 werden die beiden aufgespaltenen Teilstrahlenbündel wiedervereinigt und propagieren nach der Reflexion an der ersten Maßverkörperung 12 überlagert in Richtung der Abtastplatte 20. In der Abtastplatte 20 durchtreten die überlagerten Teilstrahlenbündel einen optisch nicht-wirksamen Bereich, beispielsweise eine geeignet platzierte Bohrung oder einen transparenten Bereich, und gelangen danach auf ein Aufspaltgitter 27, wo eine Aufspaltung in drei Raumrichtungen erfolgt. Alternativ zur dargestellten Variante könnte das Aufspaltgitter 27 im Übrigen auch in die zweite Seite der Abtastplatte 20 integriert werden. In den drei Raumrichtungen sind dann jeweils Polarisationsfilter 28.1 - 28.3 und Linsen 29.1 - 29.3 angeordnet. Über die Linsen 29.1 -29.3 werden die überlagerten Teilstrahlenbündel-Paare in Lichtwellenleiter 32.1 - 32.3 eingekoppelt und Detektorelementen 33.1 - 33.3 einer Detektoranordnung zugeführt. Mittels der Detektorelemente 33.1 - 33.3 lassen sich im Fall der Relativbewegung zwischen der ersten Maßverkörperung 12 bzw. des Objekts 10 und der Abtastplatte 20 entlang der ersten Bewegungsrichtung x phasenverschobene Positionssignale erfassen, die in bekannter Art und Weise von einer Steuereinheit weiterverarbeitbar sind. In der entsprechenden Maschine ist demzufolge die erste Maßverkörperung 12 am beweglichen Objekt 10, d.h. am beweglichen Tisch, angeordnet; die Abtastplatte 20 ist an einer demgegenüber stationären Maschinenkomponente angeordnet.

Das dargestellte Ausführungsbeispiel der erfindungsgemäßen optischen Positionsmesseinrichtung ermöglicht darüber hinaus gehend die Erfassung der Objektbewegung entlang der zweiten Bewegungsrichtung z. In den Figuren 3a - 3c ist der zugehörige Abtaststrahlengang dargestellt, über den Positionssignale bezüglich der Objektbewegung entlang der zweiten Bewegungsrichtung z erzeugbar sind. Dieser entspricht i.w. dem vorher beschriebenen Abtaststrahlengang zur Erfassung der Objekt-Bewegung entlang der ersten Bewegungsrichtung x, ist allerdings um 90° gegenüber diesem um die y-Richtung verdreht orientiert.

Die bereits für den oben erläuterten Abtaststrahlengang genutzte Lichtquelle 24 wird auch für die Abtastung der zweiten Maßverkörperung 13 verwendet und das davon emittierte Strahlenbündel in einen weiteren Lichtwellenleiter 45 eingekoppelt. Im vorliegenden Ausführungsbeispiel wird somit eine einzige Lichtquelle mindestens zur Abtastung der ersten und zweiten Maßverkörperung 12, 13 genutzt. Ein zur Aufteilung des von der Lichtquelle 24 gelieferten Strahlenbündels auf die verschiedenen Abtaststrahlengänge erforderlicher Strahlteiler ist in Figur 3a nicht gezeigt; hierfür kommen bekannte Strahlteiler in Betracht wie z.B. Strahlteilerwürfel, Strahlteilerplatten, Fasersplitter, Gitter etc.. Dem auskoppelseitigen Ende des Lichtwellenleiters 45 ist wiederum eine Kollimationsoptik 46 nachgeordnet, über die das den Lichtwellenleiter 45 verlassende Strahlenbündel kollimiert wird. Das kollimierte Strahlenbündel durchtritt anschließend einen weiteren, optisch nicht-wirksamen Bereich der Abtastplatte 20 und trifft an einem ersten Auftreffort B1 ein erstes Mal auf die zweite Maßverkörperung 13. An der zweiten Maßverkörperung 13 erfolgt gemäß Figur 3a aufgrund der Orientierung der Teilungsbereiche der 13.1, 13.2 der zweiten Maßverkörperung 13 nunmehr in der yz-Ebene eine Aufspaltung des einfallenden Strahlenbündels in zwei Teilstrahlenbündel, die dann in dieser Ebene in Richtung der Abtastplatte 20 zurückreflektiert werden. Die Aufspaltebene dieses Abtaststrahlengangs steht aufgrund der Orientierung der Teilungsbereiche 13.1, 13.2 der zweiten Maßverkörperung sowie der Erstreckungsrichtung e2 der zweiten Maßverkörperung 13 demzufolge senkrecht auf der Aufspaltebene des Abtaststrahlengangs aus den Figuren 2a - 2c.

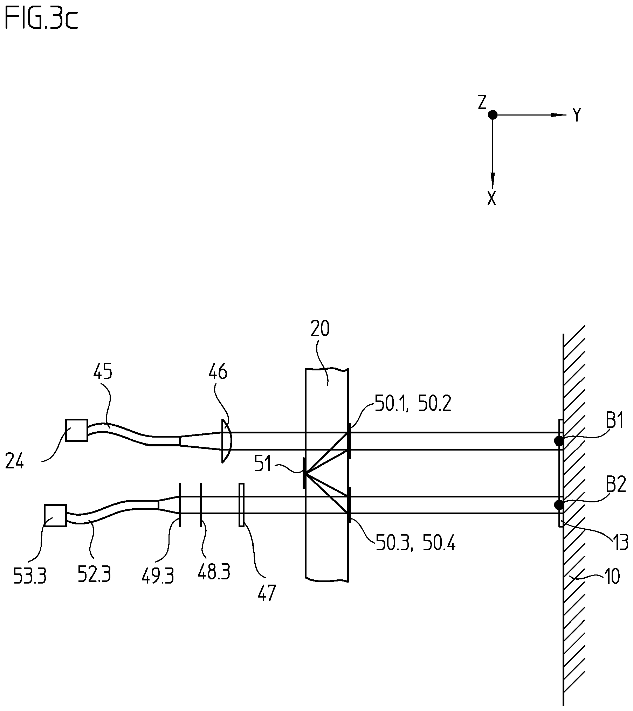

Auf Seiten der Abtastplatte 20 werden über das darin integrierte zweite Retroreflektorelement 22 die Teilstrahlenbündel in Richtung eines zweiten Auftreffortes B2 auf der zweiten Maßverkörperung 12 zurückreflektiert, der gemäß Figur 3c bzw. Figur 4 entlang der x-Richtung beabstandet zum ersten Auftreffort B1 ist. Das zweite Retroreflektorelement 22 in der Abtastplatte 20 ist ebenfalls als diffraktives Retroreflektorelement ausgebildet und umfasst mehrere diffraktive Elemente 50.1 - 50.4 sowie mindestens ein Reflektorelement 51. Die diffraktiven Elemente 50.1 - 50.4 sind wiederum auf der ersten Seite der Abtastplatte 20 angeordnet und als lokal begrenzte Transmissionsgitter mit gekrümmten Gitterlinien ausgebildet. Das sich nunmehr parallel zur zweiten Erstreckungsrichtung e2 erstreckende, rechteckförmige Reflektorelement 51 ist auf der gegenüberliegenden, zweiten Seite der Abtastplatte 20 angeordnet.

Die vom ersten Auftreffort B1 der zweiten Maßverkörperung 13 einfallenden Teilstrahlenbündel durchtreten wie aus Figur 3a ersichtlich in der Abtastplatte 20 zunächst erste und zweite diffraktive Elemente 50.1, 50.2 des zweiten Retroreflektorelements 22. Sie erfahren hierbei zum einen eine Ablenkung sowie zum anderen eine Fokussierung auf das Reflektorelement 51; hierzu sei auch auf die Ansicht des Abtaststrahlengangs in Figur 3c verwiesen. Am Reflektorelement 51 werden die Teilstrahlenbündel zurückreflektiert und durchtreten dann wie in Figur 3b dargestellt dritte und vierte diffraktive Elemente 50.3, 50.4 auf der ersten Seite der Abtastplatte 20. Über die dritten und vierten diffraktiven Elemente 50.3, 50.4 werden die durchtretenden Teilstrahlenbündel jeweils kollimiert und in Richtung des zweiten Auftreffortes B2 auf der zweiten Maßverkörperung 13 abgelenkt. Am zweiten Auftreffort B2 werden die beiden aufgespaltenen Teilstrahlenbündel wiedervereinigt und propagieren nach der Reflexion überlagert in Richtung der Abtastplatte 20. In der Abtastplatte 20 durchtreten die überlagerten Teilstrahlenbündel einen weiteren optisch nicht-wirksamen Bereich und gelangen danach auf ein weiteres Aufspaltgitter 47, wo eine Aufspaltung in drei Raumrichtungen erfolgt. In den drei Raumrichtungen sind dann wie oben ebenfalls jeweils Polarisationsfilter 48.1 - 48.3 und Linsen 49.1 - 49.3 angeordnet. Über die Linsen 49.1 - 49.3 werden die überlagerten Teilstrahlenbündel-Paare in Lichtwellenleiter 52.1 - 52.3 eingekoppelt und entfernt angeordneten Detektorelementen 53.1 - 53.3 einer Detektoranordnung zugeführt. Mittels der Detektorelemente 53.1 - 53.3 lassen sich im Fall der Relativbewegung zwischen der zweiten Maßverkörperung 13 und der Abtastplatte 20 entlang der zweiten Bewegungsrichtung z phasenverschobene Positionssignale erfassen, die von der nachgeordneten Steuereinheit weiterverarbeitbar sind.

Über die beiden erläuterten Abtaststrahlengänge kann mit der erfindungsgemäßen optischen Positionsmesseinrichtung somit die Position des Objekts 10 im Fall von Verschiebungen entlang der ersten Bewegungsrichtung x und entlang der zweiten Bewegungsrichtung z hochpräzise bestimmt werden. Damit sind grundsätzlich bereits zwei räumliche Freiheitsgrade des Objekts 10 messtechnisch erfassbar.

Im dargestellten ersten Ausführungsbeispiel der erfindungsgemäßen Positionsmesseinrichtung ist nunmehr noch ein weiterer, zweiter Abtaststrahlengang zur Erfassung der Bewegung entlang der zweiten Bewegungsrichtung z vorgesehen. Hierzu ist in der Abtastplatte 20 ein drittes Retroreflektorelement 23 integriert, wobei das dritte Retroreflektorelement 23 sich wie das zweite Retroreflektorelement 22 parallel zur zweiten Erstreckungsrichtung e2 erstreckt, die im vorliegenden Ausführungsbeispiel mit der zweiten Bewegungsrichtung z zusammenfällt. Über das dritte Retroreflektorelement 23 erfahren die von der zweiten Maßverkörperung 13 her darauf einfallenden Teilstrahlenbündel eine Rückreflexion in Richtung der zweiten Maßverkörperung. Das dritte Retroreflektorelement 23 ist wie die beiden ersten und zweiten Retroreflektorelemente 21, 22 als diffraktives Retroreflektorelement mit mehreren diffraktiven Elementen 60.1 - 60.4 und mindestens einem Reflektorelement ausgebildet. Der zweite Abtaststrahlengang zur Erfassung der Objektbewegung entlang der zweiten Bewegungsrichtung z entspricht prinzipiell dem vorher anhand der Figuren 3a - 3c erläuterten Abtaststrahlengang; auf eine erneute detaillierte Beschreibung desselbigen wird daher verzichtet. In Figur 5 sind die diffraktiven Elemente 60.1 - 60.4 des dritten Retroreflektorelements 23 auf der ersten Seite der Abtastplatte 20 gezeigt. Aus Figur 4 sind die ersten und zweiten Auftrefforte B1', B2' der Teilstrahlenbündel des zugehörigen Abtaststrahlengangs auf der zweiten Maßverkörperung 13 ersichtlich.

Über die Verrechnung der Positionssignale der beiden Abtaststrahlengänge zur Erfassung der Bewegung entlang der zweiten Bewegungsrichtung z kann in bekannter Art und Weise eine eventuelle Rotationsbewegung des Objekts 10 um die dritte Bewegungsrichtung y bestimmt werden. Auf diese Art und Weise lässt sich somit ein dritter räumlicher Freiheitsgrad des Objekts 10 messtechnisch erfassen. Die zur Erfassung aller drei Freiheitsgrade vorgesehene optische Antastung des beweglichen Objekts 10 erfolgt hierbei aus einer einzigen Richtung, die mit der dritten Bewegungsrichtung y des Objekts 10 zusammenfällt.

Wie aus der vorhergehenden Beschreibung ersichtlich, können die maßgeblichen optisch-funktionalen Bestandteile der erfindungsgemäßen Positionsmesseinrichtung in die Abtastplatte 20 integriert werden, insbesondere die zur optischen Abtastung erforderlichen Retroreflektorelemente 21, 22, 23. Im erläuterten ersten Ausführungsbeispiel sind auf der ersten Seite der Abtastplatte 20, die den Maßverkörperungen 12, 13 zugewandt ist, die verschiedenen diffraktiven Elemente 30.1 - 30.4, 50.1 - 50.4, 60.1 - 60.4 in Form geeignet ausgebildeter Transmissionsgitter angeordnet, auf der hierzu entgegengesetzten zweiten Seite die jeweils zugehörigen Reflektorelemente 31, 51.

Figur 5 zeigt eine Draufsicht auf die erste Seite der verwendeten Abtastplatte 20 mit den verschiedenen diffraktiven Elementen 30.1 - 30.4, 50.1 - 50.4, 60.1 - 60.4 der drei vorgesehenen Retroreflektorelemente 21, 22, 23. Neben den diffraktiven Elementen 30.1 - 30.4 und 50.1 - 50.4 der ersten und zweiten Retroreflektorelemente 21, 22 aus den beiden oben erläuterten Abtaststrahlengängen sind vier weitere diffraktive Elemente 60.1 - 60.4 zu erkennen, die zum dritten Retroreflektorelement 23 gehören, das ebenfalls zur Positionserfassung entlang der zweiten Bewegungsrichtung z vorgesehen ist. Die vier diffraktiven Elemente 60.1 - 60.4 des dritten Retroreflektorelements 23 sind hierbei identisch zu den vier diffraktiven Elementen 50.1 - 50.4 des zweiten Retroreflektorelements 22 ausgebildet, in der xz-Ebene gemäß Figur 5 lediglich in x-Richtung versetzt angeordnet.

Aufgrund des monolithischen Aufbaus der Abtastplatte 20 mit den darin integrierten optisch-funktionalen Bestandteilen der jeweiligen Abtastung entfällt somit eine aufwändige Justage einzelner Optikkomponenten bei der Montage der erfindungsgemäßen optischen Positionsmesseinrichtung. Auf Seiten des Objekts 10 ist lediglich erforderlich, die linearen Maßverkörperungen 12, 13 anzuordnen. Die Erfassung der drei räumlichen Freiheitsgrade des beweglichen Objekts 10 kann wie aus den Figuren ersichtlich durch die optische Antastung desselbigen aus einer einzigen Richtung erfolgen.

Die erste Ausführungsform der erfindungsgemäßen Positionsmesseinrichtung kann selbstverständlich abgewandelt und an die jeweiligen Messanforderungen und -gegebenheiten angepasst werden.

So ist es alternativ zu der in Figur 4 gezeigten Anordnung der Maßverkörperungen 12, 13 am Objekt 10 auch möglich, die erste Maßverkörperung 12 in zwei identisch ausgebildete Teil-Maßverkörperungen mit gleicher Orientierung der Teilungsbereiche aufzuteilen und diese beiden Teil-Maßverkörperungen ober- und unterhalb der zweiten Maßverkörperung 13 am Objekt anzuordnen. Im Fall einer derartigen Anordnung liegen die Schwerpunkte der Auftrefforte A1, A2 bzw. B1, B2 bzw. B1', B2' aller drei optischen Antastungen zur Erfassung der drei Bewegungs-Freiheitsgrade des Objekts 10 auf einer Linie parallel zur ersten Bewegungsrichtung x. Damit liegen auch die effektiven Messpunkte auf dieser Linie und es ergibt sich eine einfache Transformationsvorschrift in ein für die Applikation passendes Koordinatensystem. Ferner weist eine derartige Anordnung der einzelnen Maßverkörperungen eine Spiegelsymmetrie auf, was bzgl. Drift und Torsionsempfindlichkeit des Systems von Vorteil ist.

Während im erläuterten Ausführungsbeispiel jeweils eine Zuführung der Strahlenbündel von der entfernt angeordneten Lichtquelle zur Abtastplatte über Lichtwellenleiter vorgesehen war, kann die verwendete Lichtquelle natürlich auch unmittelbar benachbart zur Abtastplatte angeordnet werden, d.h. es wäre dann kein Lichtwellenleiter mehr erforderlich. Analog hierzu könnte auch auf die detektionsseitigen Lichtwellenleiter verzichtet werden, wenn die Detektorelemente unmittelbar benachbart zur Abtastplatte platziert angeordnet werden. Ferner sind auch Varianten möglich, bei denen die Zuführung der Strahlenbündel von der Lichtquelle über Lichtwellenleiter erfolgt und die Detektorelemente unmittelbar benachbart zur Abtastplatte angeordnet sind; umgekehrt kann auch die Lichtquelle unmittelbar benachbart zur Abtastplatte platziert werden und die detektionsseitigen Strahlenbündel über Lichtwellenleiter den Detektorelementen zugeführt werden.

Das erläuterte erste Ausführungsbeispiel der erfindungsgemäßen optischen Positionsmesseinrichtung, über das drei Freiheitsgrade des beweglichen Objekts messtechnisch erfassbar sind, lässt sich auch in Bezug auf die Zahl der zu erfassenden räumlichen Freiheitsgrade des beweglichen Objekts in vielfältiger Art und Weise abwandeln, ebenso sind Abwandlungen in Bezug auf geringere Anforderungen bei der Genauigkeit der Positionsbestimmung möglich.

Wenn z.B. lediglich die Erfassung von zwei räumlichen Freiheitsgraden erforderlich ist, d.h. etwa nur die messtechnische Erfassung von Linearbewegungen des Objekts entlang der ersten und zweiten Bewegungsrichtung x und z, kann die oben erwähnte zweite Abtastung zur Erfassung der Objektbewegung entlang der zweiten Bewegungsrichtung z entfallen. Das dritte Retroreflektorelement 23 in der Abtastplatte 20 wäre in diesem Fall dann nicht mehr nötig.

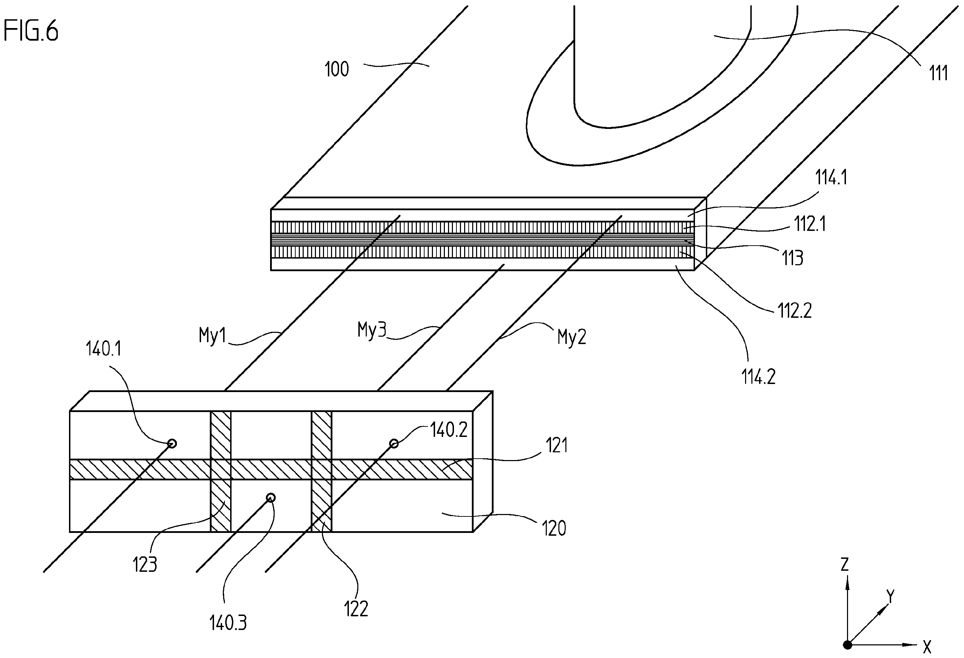

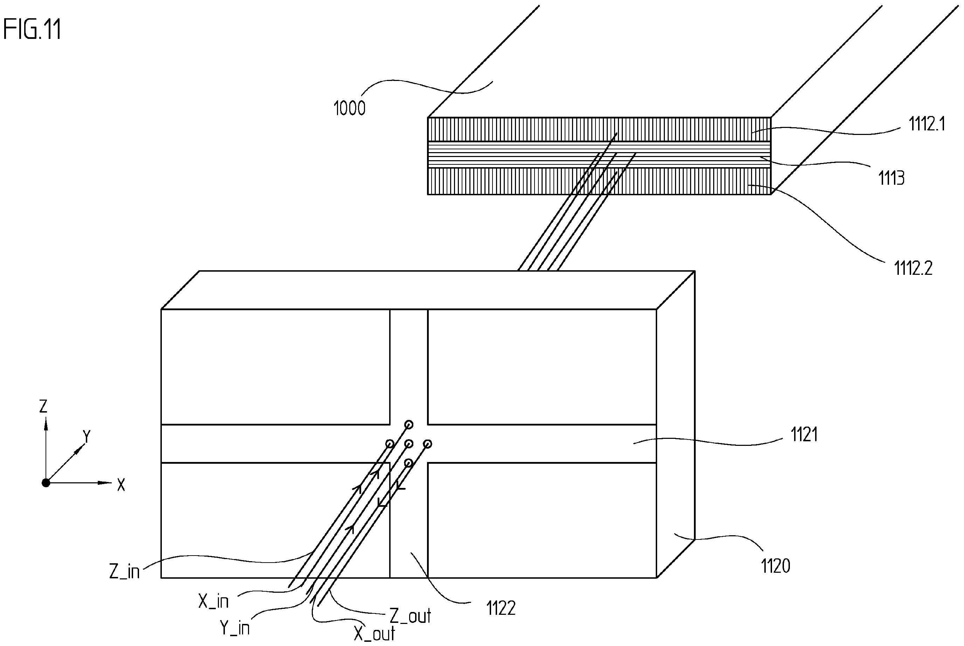

Ferner ist es möglich, über zusätzliche Maßnahmen eine hochpräzise Erfassung aller sechs räumlichen Freiheitsgrade des Objekts zu bewerkstelligen, d.h. darüber die verbleibenden drei Bewegungs-Freiheitsgrade zu erfassen. Ein entsprechendes zweites Ausführungsbeispiel der erfindungsgemäßen optischen Positionsmesseinrichtung wird nachfolgend anhand der Figuren 6, 7a - 7c sowie 8 - 10 beschrieben. Desweiteren ist eine Abwandlung dahingehend realisierbar, dass auch eine Positionserfassung in sechs räumlichen Freiheitsgraden möglich ist, wobei einzelne Bewegungsfreiheitsgrade nur mit reduzierter Genauigkeit erfasst werden; hierzu wird nachfolgend ein drittes Ausführungsbeispiel mit Hilfe der Figuren 11 - 15 erläutert. Alle diese Varianten der erfindungsgemäßen optischen Positionsmesseinrichtung sehen hierbei jeweils die geforderte, vorteilhafte optische Antastung des beweglichen Objekts aus lediglich einer einzigen Richtung vor.

In Figur 6 ist eine wiederum stark vereinfachte perspektivische Teil-Ansicht des zweiten Ausführungsbeispiels einer erfindungsgemäßen optischen Positionsmesseinrichtung gezeigt. Dargestellt sind die verwendete Abtastplatte 120 sowie die am Objekt 100 angeordneten Maßverkörperungen 112.1, 112.2, 113 und Messreflektoren 114.1, 114.2. Die Erfassung der linearen Objektbewegungen entlang der ersten Bewegungsrichtung x und entlang der zweiten Bewegungsrichtung z erfolgt ebenso wie die Erfassung der Rotationsbewegung um die dritte Bewegungsrichtung y grundsätzlich identisch zum ersten Ausführungsbeispiel. In der Abtastplatte 120 sind die hierzu erforderlichen drei Retroreflektorelemente 121, 122, 123 schematisiert angedeutet. Auf Seiten des Objekts 100 ist die nunmehr in zwei identische Teil-Maßverkörperungen 112.1, 112.2 aufgeteilte erste Maßverkörperung sowie die zweite Maßverkörperung 113 angeordnet, wobei die erste und zweite Teil-Maßverkörperung 112.1, 112.2 ober- und unterhalb der zweiten Maßverkörperung 113 angeordnet sind. Aus Gründen der Übersichtlichkeit sind in Figur 6 die zugehörigen Abtaststrahlengänge zur Abtastung der verschiedenen Maßverkörperungen 112.1, 112.2, 113 nicht gezeigt.

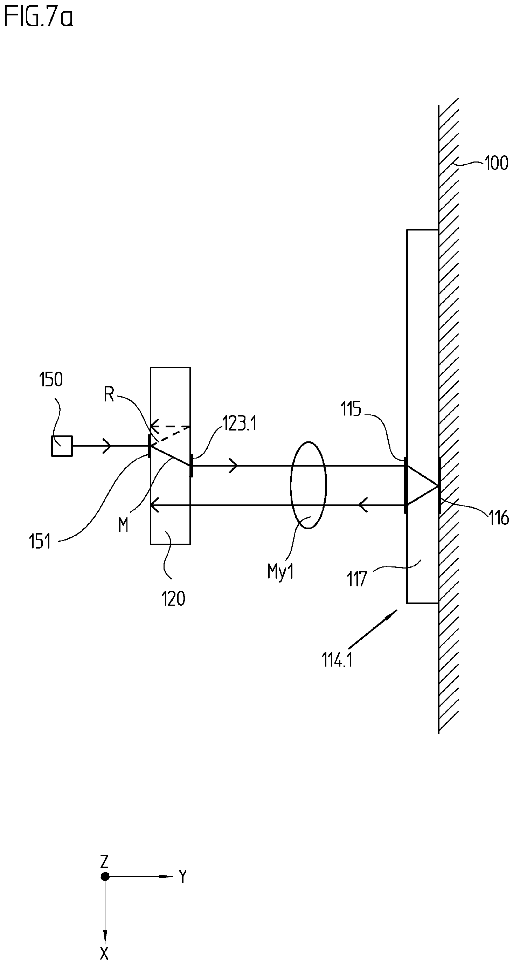

Zur Erfassung der drei weiteren Freiheitsgrade, d.h. der linearen Objektbewegung entlang der dritten Bewegungsrichtung y sowie den Rotationsbewegungen des Objekts 100 um die erste und zweite Bewegungsrichtung x, z sind zusätzlich drei schematisiert angedeutete Interferometer-Messarme My1, My2, My3 vorgesehen, über die das Objekt 100 aus der gleichen Richtung optisch angetastet wird wie auch zur Erfassung der anderen drei Freiheitsgrade. Die zugehörigen drei Interferometer-Achsen durchstoßen an den Orten 140.1, 140.2 und 140.3 die Abtastplatte 120 und treffen am Objekt 100 auf die Messreflektoren 114.1, 114.2, die in der xz-Ebene jeweils ober- und unterhalb der Teil-Maßverkörperungen 112.1, 112.2 angeordnet sind. Weitere Details zu den Interferometer-Strahlengängen sind in Figur 6 nicht gezeigt, hinsichtlich möglicher Ausführungsformen geeigneter Interferometer sei auf die nachfolgende Beschreibung der Figuren 7a - 7c sowie 8 - 10 verwiesen.

Über die drei Interferometer-Messarme My1, My2, My3 ist nunmehr zusätzlich noch die messtechnische Erfassung der drei verbleibenden räumlichen Freiheitsgrade möglich. So kann etwa aus den Messungen eines ersten Interferometer-Messarms My1 die Objektbewegung entlang der dritten Bewegungsrichtung y bestimmt werden. Aus geeigneten Kombinationen der Messungen jeweils zweier Interferometer-Messarme My2, My3 lassen sich in bekannter Art und Weise die Rotationsbewegungen des Objekts 100 um die erste Bewegungsrichtung x und um die zweite Bewegungsrichtung z erfassen; hierzu sei etwa auf die eingangs erwähnte US 6,020,964 verwiesen.

Als vorteilhaft erweist sich hierbei, wenn wie in Figur 6 ersichtlich, mindestens drei symmetrisch angeordnete Messstrahlenbündel in Richtung des mindestens einen Messreflektors 114.1, 114.2 propagieren bzw. mindestens drei symmetrisch angeordnete Interferometer-Messarme My1, My2, My3 vorgesehen werden. Während im gezeigten Ausführungsbeispiel eine punktsymmetrische Anordnung der drei Interferometer-Messarme My1, My2, My3 vorliegt, wäre etwa im Fall von vier Interferometer-Messarmen eine symmetrische Anordnung dergestalt realisierbar, dass die vier Interferometer-Messarme im Querschnitt ein Quadrat definieren etc..

Anhand der Figuren 7a - 7c sowie 8 - 10 sei nachfolgend erläutert, wie ein derartiger Interferometer-Messarm My1 ausgebildet werden kann, der in eine Positionsmesseinrichtung gemäß Figur 6 integriert ist. Analog hierzu können auch die beiden weiteren vorgesehenen Interferometer-Messarme My2, My3 etc. ausgebildet werden.

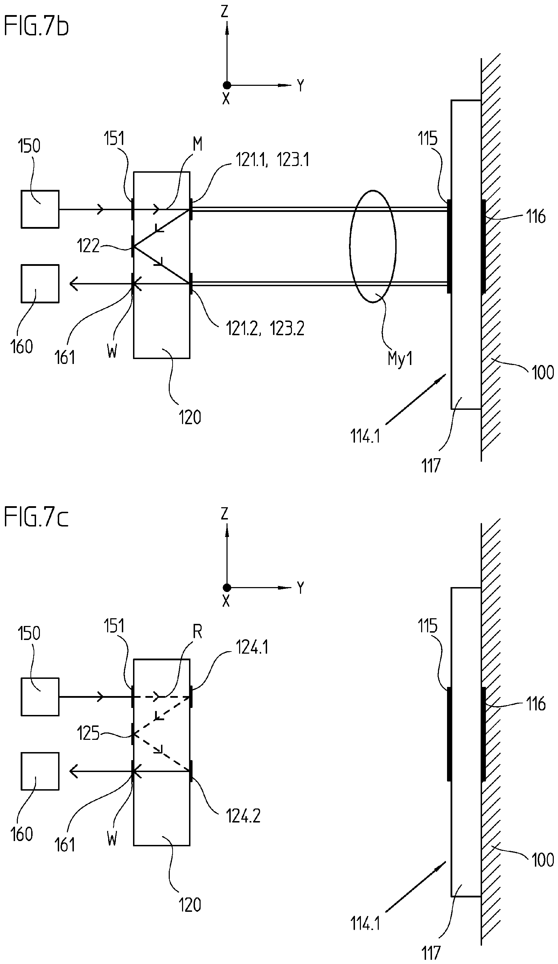

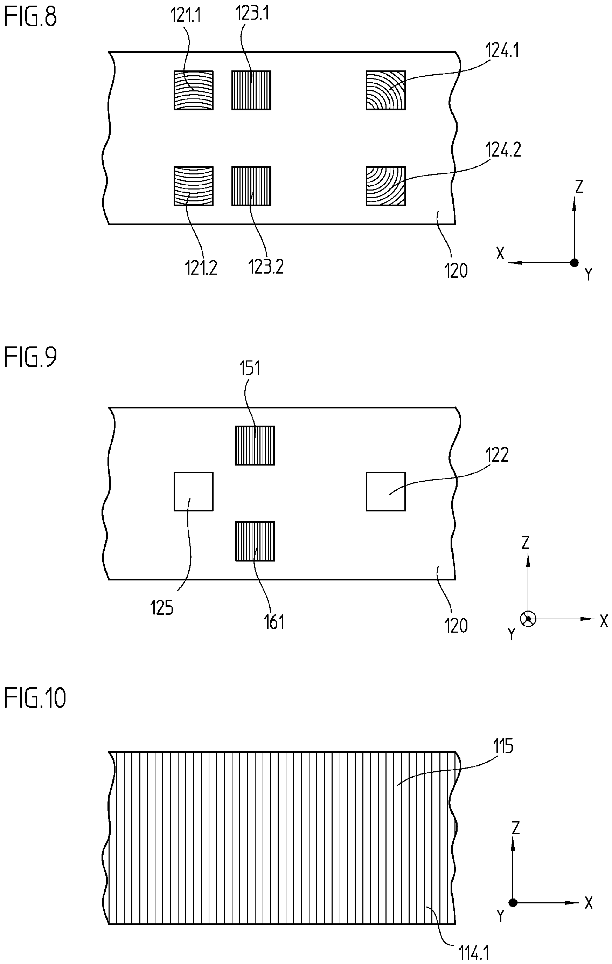

Figur 7a zeigt hierbei den Interferometer-Strahlengang in der xy-Ebene, Figur 7b den Strahlengang im Interferometer-Messarm in der yz-Ebene und Figur 7c den Strahlengang im Interferometer-Referenzarm in der yz-Ebene. Die Anordnung der verschiedenen optisch-funktionsrelevanten Elemente zur Ausbildung des Interferometer-Messarms My1 ist insbesondere in den Figuren 8 - 10 ersichtlich; hier zeigt Figur 8 eine Draufsicht auf den in diesem Zusammenhang relevanten Teil der ersten Seite der Abtastplatte 120, Figur 9 eine Draufsicht auf die gegenüberliegende zweite Seite der Abtastplatte 120 und Figur 10 eine Draufsicht auf den vom Interferometer-Messarm My1 beaufschlagten Teil des Messreflektors 114.1.

Ein von einer Lichtquelle 150 erzeugtes Strahlenbündel trifft auf ein Strahlteilerelement 151, über das eine Aufspaltung des einfallenden Strahlenbündels in ein Messstrahlenbündel M und ein Referenzstrahlenbündel R erfolgt. Im vorliegenden Ausführungsbeispiel ist eine separate Lichtquelle 150 für die Interferometer-Messarme vorgesehen; auf diese Art und Weise können geeignet optimierte Lichtquellen für die Interferometer-Positionsmessungen und die gitterbasierten Positionsmessungen gewählt werden. Grundsätzlich wäre alternativ aber auch die Verwendung einer gemeinsamen Lichtquelle für die verschiedenen genutzten, optischen Positionsmessprinzipien möglich.

Mess- und Referenzstrahlenbündel M, R propagieren nach der Aufspaltung dann im Interferometer-Messarm My1 bzw. im Interferometer-Referenzarm. In Figur 7a ist das Messstrahlenbündel M mittels durchgängiger Linien dargestellt, das Referenzstrahlenbündel R strichliniert.

Als Strahlteilerelement 151 fungiert im dargestellten Ausführungsbeispiel ein Transmissionsgitter, das auf der zweiten Seite der Abtastplatte 120 angeordnet ist, die der Lichtquelle 150 zugeordnet ist. Wie aus Figur 9 ersichtlich, ist die Längsachse der Teilungsbereiche dieses Transmissionsgitters parallel zur zweiten Bewegungsrichtung z orientiert. Die Erstreckungsrichtung dieses Transmissionsgitters ist parallel zur ersten Bewegungsrichtung orientiert.

Nach der erfolgten Aufspaltung und Ablenkung in der xy-Ebene propagiert das Messstrahlenbündel in Richtung der ersten Seite der Abtastplatte 120, durchläuft dort ein erstes Umlenkelement 123.1 in Form eines Transmissionsgitters, wird davon parallel zur y-Richtung ausgerichtet und propagiert ein erstes Mal in Richtung des am Objekt 100 angeordneten Messreflektors 114.1. Der Messreflektor 114.1 ist im vorliegenden Ausführungsbeispiel als diffraktiver Messreflektor ausgebildet und umfasst ein diffraktives Element 115, ausgebildet als Transmissionsgitter, sowie ein Reflektorelement 116. Das diffraktive Element 115 und das Reflektorelement 116 sind wie aus Figur 7a ersichtlich auf der Vorder- und Rückseite einer Glasplatte 117 angeordnet. Die Vorderseite der Glasplatte 117 ist hierbei in Richtung der Abtastplatte 120 orientiert.

Gemäß Figur 7a wird beim Durchtreten des diffraktiven Elements 115 das senkrecht darauf einfallende Messstrahlenbündel M in der xy-Ebene abgelenkt und propagiert in Richtung des Reflektors 116. Dort erfolgt eine Rückreflexion in der xy-Ebene in Richtung des diffraktiven Elements 115. Nach dem zweiten Passieren des diffraktiven Elements 115 und der darüber erneut erfolgenden Ablenkung in der xy-Ebene propagiert das Messstrahlenbündel M in x-Richtung parallel versetzt zum einfallenden Messstrahlenbündel M zurück in Richtung der Abtastplatte 120. Dort trifft das Messstrahlenbündel M auf ein Messstrahl-Retroreflektorelement, das ebenfalls als diffraktives Retroreflektorelement ausgebildet ist und zwei diffraktive Elemente 121.1, 121.2 auf der ersten Seite der Abtastplatte 120 sowie ein Reflektorelement 122 auf der zweiten Seite der Abtastplatte 120 umfasst. Die diffraktiven Elemente 121.1, 121.2 sind wieder als lokal begrenzte Transmissionsgitter mit gekrümmten Gitterlinien ausgebildet, wie dies etwa aus Figur 8 ersichtlich ist. Als Reflektorelement 122 fungiert ein planer Reflektor, dessen reflektierende Seite in Richtung der ersten Seite der Abtastplatte 120 orientiert ist. Das Messstrahlenbündel M trifft zunächst auf das erste diffraktive Element 121.1 des Messstrahl-Retroreflektorelements, über das gemäß Figur 7b eine Ablenkung in der yz-Ebene nach unten in Richtung des auf der zweiten Seite der Abtastplatte 120 angeordneten Reflektorelements 122 erfolgt. Nach der Rückreflexion vom Reflektorelement 122 in Richtung der ersten Seite der Abtastplatte 120 durchtritt das Messstrahlenbündel M das zweite diffraktive Element des 121.2 des Messstrahl-Retroreflektorelements, wird darüber wieder abgelenkt, so dass es ein zweites Mal in Richtung des Messreflektors 114.1 propagiert; hierbei propagiert das Messstrahlenbündel dieses Mal in z-Richtung nach unten versetzt parallel zur dritten Bewegungsrichtung y zum Messreflektor 114.1, wie dies in Figur 7b ersichtlich ist. Am Messreflektor 114.1 durchtritt das Messstrahlenbündel M erneut das diffraktive Element 115, wird davon in Richtung des Reflektorelements 116 abgelenkt, von dort in Richtung des diffraktiven Elements 115 zurückreflektiert und beim Durchtreten desselbigen wieder so abgelenkt, dass es parallel zur dritten Bewegungsrichtung y, jedoch gegenüber dem einfallenden Messstrahlenbündel in x-Richtung versetzt, zurück zur Abtastplatte 120 propagiert. Auf der ersten Seite der Abtastplatte 120 trifft das Messstrahlenbündel M auf das zweite Umlenkelement 123.2, wiederum ausgebildet als Transmissionsgitter, und wird von diesem in der xy-Ebene in Richtung des Orts W auf der zweiten Seite der Abtastplatte 120 umgelenkt, wo es mit Referenzstrahlenbündel R an einem Vereinigungsgitter 161 wiedervereinigt wird. Das Vereinigungsgitter 161 ist wie aus Figur 9 ersichtlich in die zweite Seite der Abtastplatte 120 integriert ausgebildet.

Der detaillierte Strahlengang des Referenzstrahlenbündels R im Interferometer-Referenzarm sei nachfolgend anhand der Figuren 7a und 7c erläutert. Nach der Aufspaltung am Strahlteilerelement 151 und der dabei resultierenden Ablenkung in der xy-Ebene propagiert das Referenzstrahlenbündel R in Richtung eines Referenzstrahl-Retroreflektorelements. Auch das Referenzstrahl-Retroreflektorelement ist diffraktiv ausgebildet und umfasst zwei diffraktive Elemente 124.1, 124.2 auf der ersten Seite der Abtastplatte 120 sowie ein Reflektorelement 125 auf der zweiten Seite der Abtastplatte. Als diffraktive Elemente 124.1, 124.2 fungieren nunmehr jedoch Reflexionsgitter, deren optisch-wirksame bzw. reflektierende Seiten in Richtung der zweiten Seite der Abtastplatte 120 orientiert sind. Als Reflektorelement 125 dient wie in den diffraktiven Retroreflektorelementen ein planer Reflektor, dessen reflektierende Seite in Richtung der ersten Seite der Abtastplatte 120 orientiert ist.

Das Referenzstrahlenbündel R trifft zunächst auf das erste diffraktive Element 124.1 des Referenzstrahl-Retroreflektorelements und wird davon in Richtung des Reflektorelements 125 reflektiert bzw. abgelenkt. Vom Reflektorelement wird das Referenzstrahlenbündel R in Richtung des zweiten diffraktiven Elements 124.2 reflektiert und von dort in Richtung des Orts W am Vereinigungsgitter 161 reflektiert und umgelenkt.

Im dargestellten Ausführungsbeispiel propagiert das Referenzstrahlenbündel R somit zwischen der Aufspaltung am Aufspaltelement 151 und der Wiedervereinigung bzw. Überlagerung mit dem Messstrahlenbündel M am Ort W ausschließlich in der Abtastplatte 120.

Die wiedervereinigten Mess- und Referenzstrahlenbündel M, R gelangen anschließend auf die in den Figuren 7b und 7c lediglich schematisiert angedeutete Interferometer-Detektoranordnung 160. Über diese können in bekannter Art und Weise aus den überlagerten Mess- und Referenzstrahlenbündeln M, R Positionssignale bezüglich der Objektbewegung entlang der dritten Bewegungsrichtung y erzeugt werden.

Analog zum erläuterten Strahlengang im Interferometer-Messarm My1 verlaufen auch die Strahlengänge in den beiden weiteren Interferometer-Messarmen My2, My3 des zweiten Ausführungsbeispiels der erfindungsgemäßen optischen Positionsmesseinrichtung.

Auch das zweite Ausführungsbeispiel der erfindungsgemäßen optischen Positionsmesseinrichtung lässt sich im Rahmen der vorliegenden Erfindung abwandeln.

So kann etwa eine alternative Strahlengangführung für das Mess- und Referenzstrahlenbündel vorgesehen werden. Es ist dabei auch möglich, das Strahlteilerelement nicht als integralen Bestandteil der Abtastplatte auszubilden, sondern ein davon räumlich getrenntes Strahlteilerelement zu verwenden, das geeignet mechanisch starr mit der Abtastplatte gekoppelt ist. In diesem Fall können herkömmliche Planspiegelinterferometer eingesetzt werden, die als Messreflektoren Planspiegel umfassen.

Desweiteren können auch mehr als drei Interferometer-Messarme vorgesehen werden, die durch die Abtastplatte in Richtung von Messreflektoren am Objekt geführt werden. Derartige, zusätzliche Interferometer-Messarme können etwa zur Selbstkalibration der Vorrichtung genutzt werden.

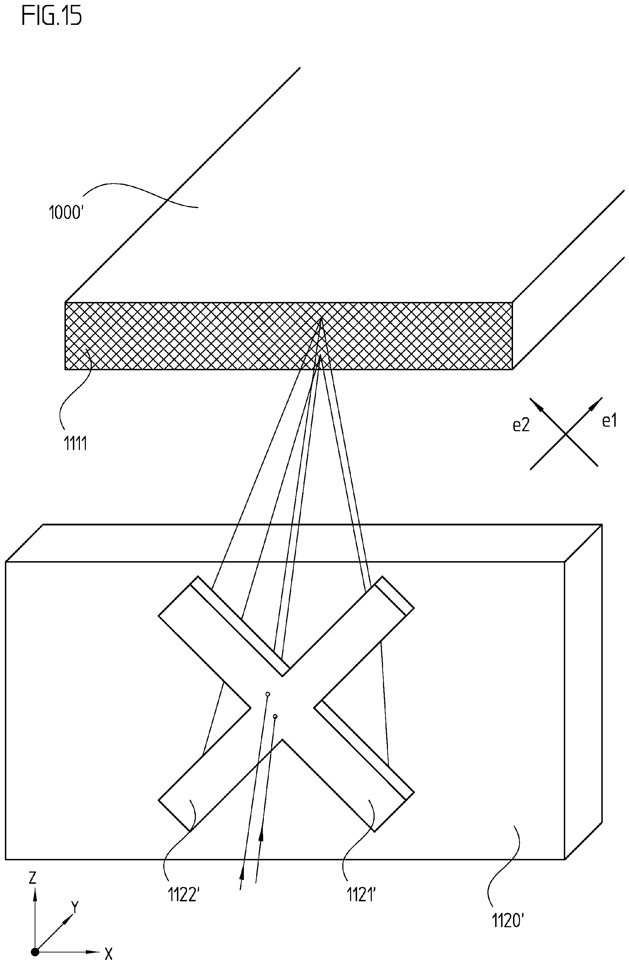

Das erläuterte zweite Ausführungsbeispiel der erfindungsgemäßen optischen Positionsmesseinrichtung ermöglicht die hochpräzise Erfassung der Objektbewegung in allen sechs räumlichen Freiheitsgraden. Hierbei handelt es sich um die drei linearen Bewegungs-Freiheitsgrade bzgl. der Objektbewegung entlang der drei Bewegungsrichtungen x, z und y sowie um die drei rotatorischen Bewegungs-Freiheitsgrade bzgl. der Objektrotation um die drei Bewegungsrichtungen x, z und y. In bestimmten Anwendungen kann es nunmehr ausreichen, wenn lediglich die linearen Bewegungs-Freiheitsgrade hochpräzise erfasst werden, in Bezug auf die rotatorischen Bewegungs-Freiheitsgrade kann jedoch mitunter eine geringere Genauigkeit bei der Positionsbestimmung ausreichend sein. Eine entsprechende Variante der erfindungsgemäßen optischen Positionsmesseinrichtung wird nachfolgend als drittes Ausführungsbeispiel anhand der Figuren 11 - 14e erläutert, eine geringfügig abgewandelte Variante des dritten Ausführungsbeispiels ist in Figur 15 dargestellt.

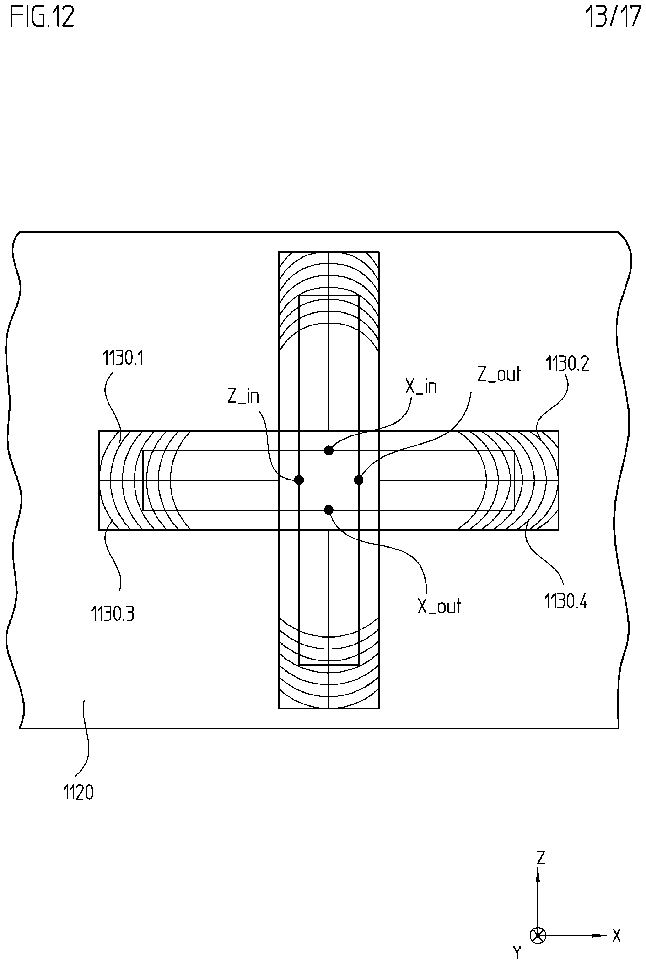

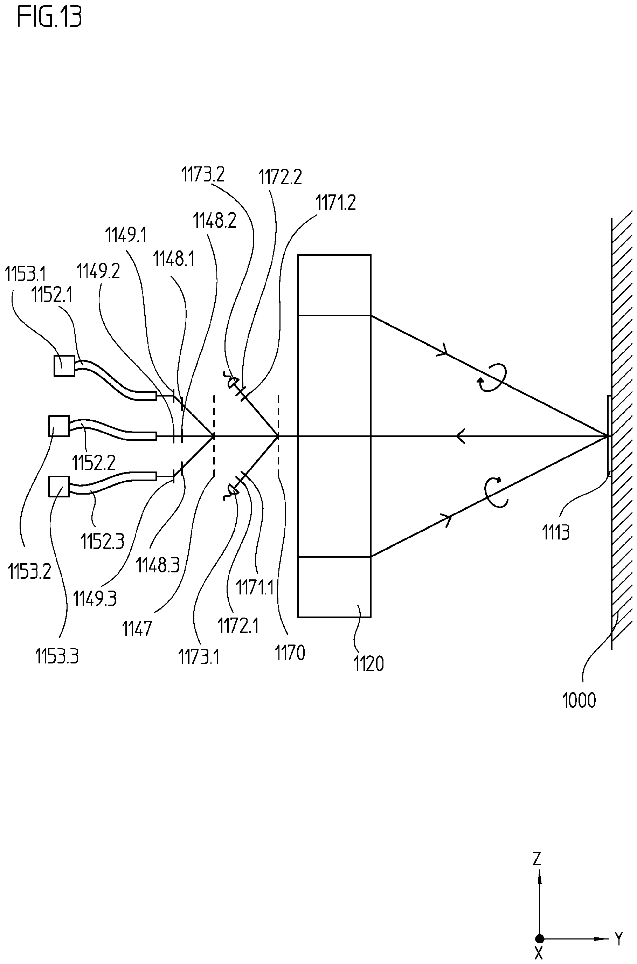

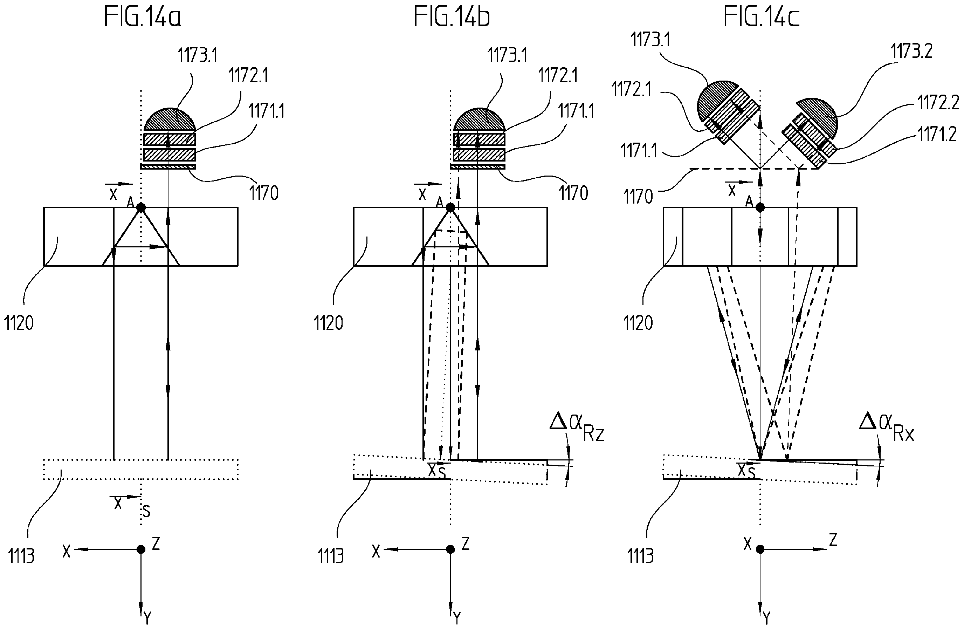

Figur 11 zeigt eine stark schematisierte perspektivische Ansicht der dritten Ausführungsform der erfindungsgemäßen optischen Positionsmesseinrichtung, Figur 12 eine Draufsicht auf die erste Seite der genutzten Abtastplatte 1120, Figur 13 einen Teil-Abtaststrahlengang. Die Figuren 14a - 14e zeigen Darstellungen verschiedener Abtaststrahlengänge im Fall der Objektrotation um die verschiedenen Bewegungsrichtungen.

Wie aus Figur 11 ersichtlich, sind in die Abtastplatte 1120 der dritten Ausführungsform der erfindungsgemäßen optischen Positionsmesseinrichtung lediglich ein erstes Retroreflektorelement 1121 sowie ein hierzu orthogonales zweites Retroreflektorelement 1122 integriert. Das erste Retroreflektorelement 1121 erstreckt sich analog zum ersten Ausführungsbeispiel parallel zur ersten Erstreckungsrichtung e1 der beiden Teil-Maßverkörperungen 1112.1, 1112.2 am beweglichen Objekt 1000, wobei die erste Erstreckungsrichtung e1 wiederum parallel zur ersten Bewegungsrichtung x orientiert ist; ebenso analog zum ersten Ausführungsbeispiel erstreckt sich das zweite Retroreflektorelement 1122 parallel zur zweiten Erstreckungsrichtung e2 der zweiten Maßverkörperung 1113, wobei die zweite Erstreckungsrichtung e2 ebenfalls wieder parallel zur zweiten Bewegungsrichtung z orientiert ist. Die Erfassung der linearen Objektbewegungen entlang der ersten und zweiten Bewegungsrichtung x, z erfolgt identisch zum ersten Ausführungsbeispiel, auf eine erneute Beschreibung der zugehörigen optischen Abtaststrahlengänge wird deshalb verzichtet. In Figur 11 als auch in Figur 12 sind die auf die Abtastplatte 1120 einfallenden Strahlenbündel zur Erfassung der Objektbewegung entlang der ersten und zweiten Bewegungsrichtung x, z jeweils mit x_in und z_in bezeichnet, das überlagerte Paar von Teilstrahlenbündeln der zugehörigen Abtaststrahlengänge mit x_out und z_out. Zur Erfassung der Linearbewegung entlang der dritten Bewegungsrichtung y ist wie im vorhergehenden, zweiten Ausführungsbeispiel ein Interferometer vorgesehen, von dem lediglich ein auf die Abtastplatte 1120 einfallendes Strahlenbündel y_in in Figur 11 gezeigt ist. Der zugehörige Strahlengang kann wie im zweiten Ausführungsbeispiel erläutert gewählt werden.

Es verbleibt somit die Erfassung der drei Rotationsfreiheitsgrade im Fall einer eventuellen Rotation des Objekts 1000 um die orthogonalen Bewegungsrichtungen x, z und y. Diese Erfassung erfolgt nunmehr durch Auskoppeln von Teilstrahlenbündeln auf positionsempfindliche Detektorelemente 1173.1, 1173.2 aus dem Strahlengang mit den nach der Wiedervereinigung in Richtung Detektoranordnung propagierenden Teilstrahlenbündeln. Figur 13 zeigt hierbei den Teilstrahlengang gemäß Figur 3b des ersten Ausführungsbeispiels, der zur Erfassung der Objektbewegung entlang der zweiten Bewegungsrichtung z dient. In diesem Strahlengang erfolgt zwischen der zweiten Seite der Abtastplatte 1120 und dem Aufspaltgitter 1147 die Auskopplung von Teilstrahlenbündeln zur Erfassung der Rotationsfreiheitsgrade um die Bewegungsrichtungen x, z, und y. Hierzu ist ein Aufspaltelement 1170 in Form eines weiteren Aufspaltgitters im Strahlengang der überlagerten Teilstrahlenbündel angeordnet, das eine Aufspaltung der darauf einfallenden Strahlenbündel in drei Raumrichtungen bewirkt. Die in 0. Beugungsordnung unabgelenkt passierenden Teilstrahlenbündel werden wie im ersten Ausführungsbeispiel zur Erfassung der linearen Objektbewegung entlang der zweiten Bewegungsrichtung z genutzt. Hierzu treffen diese wie oben erläutert auf das nachgeordnete weitere Aufspaltgitter 1147, wo eine Aufspaltung in drei Raumrichtungen erfolgt. In den drei Raumrichtungen sind wiederum jeweils Polarisationsfilter 1148.1 - 1148.3 und Linsen 1149.1 - 1149.3 angeordnet. Über die Linsen 1149.1 - 1149.3 werden die überlagerten Teilstrahlenbündel-Paare in Lichtwellenleiter 1152.1 - 1152.3 eingekoppelt und entfernt angeordneten Detektorelementen 1153.1 - 1153.3 einer Detektoranordnung zugeführt. Mittels der Detektorelemente 1153.1 - 1153.3 lassen sich im Fall der Relativbewegung entlang der zweiten Bewegungsrichtung z wie oben phasenverschobene Positionssignale erfassen.

Die am Aufspaltelement 1170 in die +1. und -1. Beugungsordnung gebeugten Teilstrahlenbündel werden über Lambda/4-Plättchen 1171.1, 1171.2 und Polarisatoren 1172.1, 1172.2 auf die positionsempfindlichen Detektorelemente 1173.1, 1173.2 gelenkt. Im Fall einer Rotation des Objekts 1000 um eine der Bewegungsrichtungen x, z oder y wandern die Auftrefforte der Teilstrahlenbündel in definierter Art und Weise auf den positionsempfindlichen Detektorelementen 1173.1, 1173.2. Über die Detektion der Lage der Auftrefforte der abgespaltenen Teilstrahlenbündel auf den positionsempfindlichen Detektorelementen 1173.1, 1173.2 lässt sich die jeweilige Objekt-Rotation um die entsprechende Bewegungsrichtung x, z oder y messtechnisch erfassen. Die positionsempfindlichen Detektorelemente 1173.1, 1173.2 müssen dazu die Auftrefforte der Teilstrahlenbündel in beiden lateralen Richtungen getrennt detektieren. Als positionsempfindliche Detektorelemente 1173.1, 1173.2 können sogenannte PSDs (Position Sensitive Devices) oder aber Quadrantendioden verwendet werden.

Anhand der Figuren 14a - 14e sei diese Erfassung der rotatorischen Freiheitsgrade nochmals im Detail erläutert. Figur 14a zeigt hierbei den Abtaststrahlengang zur Erfassung der Bewegung entlang der zweiten Bewegungsrichtung z analog zur Darstellung in Figur 3c, jedoch ergänzt um einen Teil der Komponenten, die zur Erfassung der verschiedenen Rotationsbewegungen erforderlich sind; hierbei handelt es sich um das Aufspaltelement 1170, das Lambda/4-Plättchen 1171.1, den Polarisator 1172.1 und das positionsempfindlichen Detektorelement 1173.1. Während in Figur 14a die unverkippte Nominallage des Objekts bzw. der Maßverkörperung 1113 gezeigt ist, wird in den Darstellungen der Figuren 14b und 14c der jeweilige Zustand angedeutet, wenn das Objekt bzw. die zweite Maßverkörperung 1113 um die zweite Bewegungsrichtung z (Figur 14b) bzw. um die erste Bewegungsrichtung x (Figur 14c) verkippt wird. Durchgezogen ist in den Figuren 14b und 14c jeweils der Abtaststrahlengang im unverkippten Zustand eingezeichnet, strichliniert der Abtaststrahlengang im verkippten Zustand. Während wie aus den Figuren ersichtlich, in der unverkippten Nominallage die Teilstrahlenbündel jeweils zentral auf die positionsempfindlichen Detektorelemente 1173.1, 1173.2 einfallen, resultiert im Fall einer Verkippung um die zweite Bewegungsrichtung z ein Auswandern des Auftreffortes auf den positionsempfindlichen Detektorelementen 1173.1, 1173.2 entlang der ersten Bewegungsrichtung x nach links oder rechts (Figur 14b); im Fall der Verkippung um die erste Bewegungsrichtung x resultiert ein Auswandern des Auftreffortes auf den positionsempfindlichen Detektorelementen 1173.1, 1173.2 entlang der zweiten Bewegungsrichtung z (Figur 14c). Durch das Erfassen des jeweiligen Betrages, um den ein solches Auswandern des Auftreffortes erfolgt, kann in dieser Ausführungsform der erfindungsgemäßen Positionsmesseinrichtung der Grad der Verkippung um die jeweilige Bewegungsachse z oder x messtechnisch erfasst werden.

Wie bereits oben erwähnt, sind vor den jeweiligen positionsempfindlichen Detektorelementen 1173.1, 1173.2 Lambda/4-Plättchen 1171.1, 1171.2 und Polarisatoren 1172.1, 1172.2 angeordnet, die von den verschiedenen Teilstrahlenbündeln durchlaufen werden. Über diese Elemente werden aus den bereits interferierenden Teilstrahlenbündeln die ursprünglichen Teilstrahlenbündel vor der Überlagerung herausgefiltert, die dann definiert einem zugehörigen positionsempfindlichen Detektorelement 1173.1, 1173.2 zugeführt werden.

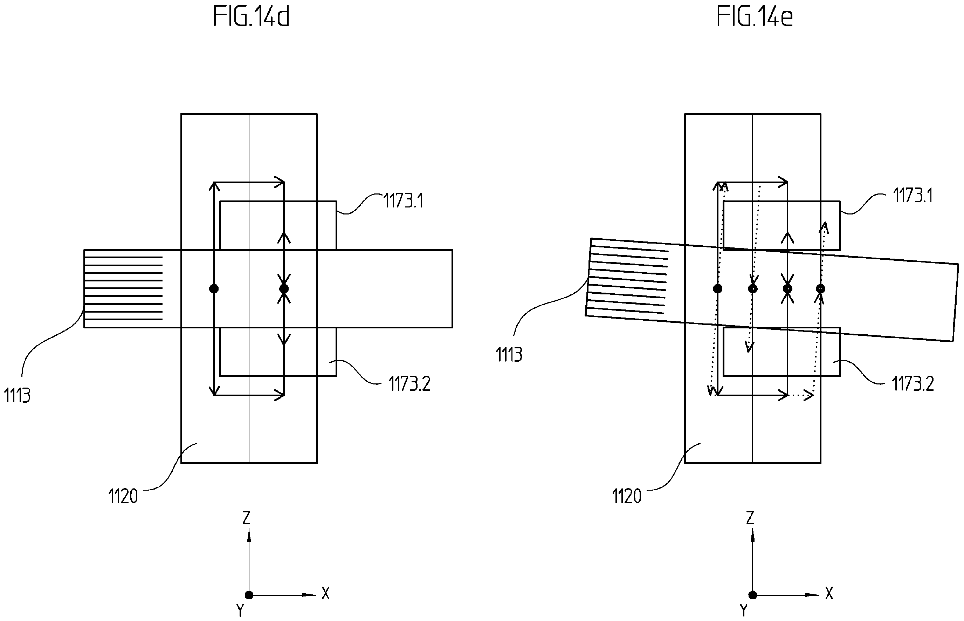

In den Figuren 14d und 14e ist schließlich noch veranschaulicht, wie sich die eventuelle Objektrotation um die dritte Bewegungsrichtung y messtechnisch mit dieser Ausführungsform der erfindungsgemäßen Positionsmesseinrichtung erfassen lässt. Während Figur 14a wiederum den Abtaststrahlengang in der xz-Ebene im unverkippten Zustand zeigt, ist in Figur 14b zusätzlich in strichlinierter Form der Abtaststrahlengang in dieser Darstellung gezeigt, wenn eine Objektrotation um die dritte Bewegungsrichtung y resultiert. Wie aus Figur 14e ersichtlich, resultiert in diesem Fall eine entgegengesetzte Verschiebung der beiden Teilstrahlenbündel und damit der Auftrefforte auf den positionsempfindlichen Detektorelementen 1173.1, 1173.2.

Alternativ zur gezeigten Variante mit der Auskopplung auf positionsempfindliche Detektorelemente 1173.1, 1173.2 nach der Wiedervereinigung, kann auch vorgesehen werden, aus den Teilstrahlenbündeln vor der Wiedervereinigung Teile auf positionsempfindlichen Detektorelemente auszukoppeln und aus der resultierenden Auslenkung der Auftrefforte im Fall von Rotationsbewegungen des Objekts diese messtechnisch zu erfassen.

Eine weitere Variante der dritten Ausführungsform der erfindungsgemäßen optischen Positionsmesseinnrichtung ist in Figur 15 gezeigt. Wie aus der Figur ersichtlich, sind in die Abtastplatte 1120' wiederum zwei zueinander orthogonale Retroreflektorelemente 1121', 1122' integriert ausgebildet, jedoch gegenüber dem vorhergehenden Ausführungsbeispiel um die dritte Bewegungsrichtung y um 45° verdreht angeordnet; abgetastet wird eine zweidimensionale Maßverkörperung 1111 am Objekt, die als sog. Kreuzgitter ausgebildet ist. Das Kreuzgitter kann hierbei als Überlagerung der ersten und zweiten Maßverkörperung des ersten Ausführungsbeispiels mit senkrecht zueinander orientierten Teilungsbereichen in einer einzigen Maßverkörperung 1111 betrachtet werden, wobei die erste und zweite Maßverkörperung ebenfalls um 45° um die dritte Bewegungsrichtung y verdreht angeordnet sind. Die beiden Retroreflektorelemente 1121', 1122' erstrecken sich wie in den vorhergehenden Ausführungsbeispielen nach wie vor entlang der Erstreckungsrichtungen e1, e2 der beiden nunmehr überlagerten ersten und zweiten Maßverkörperungen; die erste Bewegungsrichtung x nimmt jedoch nunmehr einen Winkel von 45° zur ersten Erstreckungsrichtung e1 ein und die zweite Bewegungsrichtung z einen Winkel von 45° zur zweiten Erstreckungsrichtung e2. Darüber hinaus entspricht diese Variante dem vorher erläuterten dritten Ausführungsbeispiel der erfindungsgemäßen optischen Positionsmesseinrichtung.

Da in dieser Variante keine getrennten Gitterspuren auf dem Messreflektor vorgesehen werden müssen, können die Messbereiche des Messreflektors erheblich vergrößert werden. Auch ist es in dieser Variante möglich, drei herkömmliche Planspiegelinterferometer für die hochgenaue Bestimmung der Bewegung entlang der dritten Bewegungsrichtung y und der Objektrotationen um die erste und zweite Bewegungsrichtung x und z zu verwenden. Da die Messstrahlen der Planspiegelinterferometer ebenfalls auf das Kreuzgitter der zweidimensionalen Maßverkörperung treffen und von diesem möglichst ohne Ablenkung reflektiert werden sollen, ist es vorteilhaft für die Planspiegelinterferometer eine separate Lichtquelle mit einer anderen Wellenlänge zu verwenden. Die andere Wellenlänge wird so gewählt, dass das Kreuzgitter eine starke nullte Beugungsordnung hat und damit den einfallenden Lichtstrahl wie bei einem Spiegel reflektiert.

Als besonderer Vorteil dieser Variante wäre anzuführen, dass darüber bei jeglicher Bewegung entlang der ersten oder zweiten Bewegungsrichtung x bzw. z Positionssignale bezüglich jeder Bewegungsrichtung resultieren; auf diese Art und Weise ist stets eine Signalkompensation möglich. Im Fall einer bloßen Bewegung entlang der ersten oder zweiten Bewegungsrichtung wird bei den vorher erläuterten Varianten hingegen nur ein Positionssignal entlang dieser Bewegungsrichtung erzeugt, d.h. eine Signalkompensation ist darüber nicht möglich.

Neben den erläuterten Ausführungsbeispielen der erfindungsgemäßen optischen Positionsmesseinrichtung gibt es selbstverständlich im Rahmen der vorliegenden Erfindung noch weitere Ausgestaltungsmöglichkeiten.

So ist es keinesfalls zwingend, dass die Abtastplatte - wie in den Ausführungsbeispielen jeweils vorgesehen - unbedingt rechteckförmig ausgebildet sein muss und ungenutzte Bereiche außerhalb der Retroreflektorelemente aufweist. In einer alternativen Variante kann die Abtastplatte im Querschnitt auch lediglich aus den vorgesehenen Retroreflektorelementen bestehen usw..

## Patentansprüche

1. Optische Positionsmesseinrichtung zur Erfassung der Position eines Objekts (10; 100; 1000; 1000') in mehreren Freiheitsgraden, wobei das Objekt (10; 100; 1000; 1000') mindestens entlang einer ersten Bewegungsrichtung (x) und entlang einer zweiten Bewegungsrichtung (z) beweglich angeordnet ist, mit
- mindestens einer L chtquelle (24; 150),
- mindestens einer am Objekt (10; 100; 1000; 1000') angeordneten ersten Maßverkörperung (12; 112.1, 112.2; 1112.1, 1112.2), die sich entlang einer ersten Erstreckungsrichtung (e1) erstreckt und entlang der ersten Erstreckungsrichtung (e1) periodisch angeordnete Teilungsbereiche (12.1, 12.2) umfasst,
- mindestens einer am Objekt (10; 100; 1000; 1000') angeordneten zweiten Maßverkörperung (13; 113; 1113), die sich entlang einer zweiten Erstreckungsrichtung (e2) erstreckt und entlang der zweiten Erstreckungsrichtung (e2) periodisch angeordnete Teilungsbereiche (13.1, 13.2) umfasst,
- einer Abtastplatte (20; 120; 1120; 1120'), in die mindestens erste und zweite Retroreflektorelemente (21; 121; 1121; 1121'; 22; 122; 1122; 1122') integriert sind, wobei sich die Längserstreckungsrichtung des ersten Retroreflektorelements (21; 121; 1121; 1121') parallel zur ersten Erstreckungsrichtung (e1) und die Längserstreckungsrichtung des zweiten Retroreflektorelements (22; 122; 1122; 1122') parallel zur zweiten Erstreckungsrichtung (e2) erstreckt und über die Teilstrahlenbündel, die von der ersten und zweiten Maßverkörperung (12; 112.1, 112.2; 1112.1, 1112.2; 13; 113; 1113) her darauf einfallen, eine Rückreflexion in Richtung der jeweiligen Maßverkörperung (12; 112.1, 112.2; 1112.1, 1112.2; 13; 113; 1113) erfahren,
- einer Detektoranordnung (160), über die aus überlagerten Teilstrahlenbündeln mindestens Positionssignale bezüglich der Bewegung des Objekts (10; 100; 1000; 1000') entlang der ersten und zweiten Bewegungsrichtung (x, z) erzeugbar sind,
- und wobei die Retroreflektorelemente (21; 121; 1121; 1121'; 22; 122; 1122; 1122') als diffraktive Retroreflektorelemente ausgebildet sind, mit
- mehreren diffraktiven Elementen (30.1 - 30.4; 121.1, 121.2; 124.1, 124.2; 1130.1 - 1130.4), die auf einer ersten Seite der Abtastplatte (20; 120; 1120; 1120') angeordnet sind und
- mindestens einem Reflektorelement (31, 51; 122, 125), das auf der gegenüberliegenden zweiten Seite der Abtastplatte (20; 120; 1120; 1120') angeordnet ist und dessen reflektierende Seite in Richtung der diffraktiven Elemente (30.1 - 30.4; 121.1, 121.2; 124.1, 124.2; 1130.1 - 1130.4) orientiert ist, wobei sich das Reflektorelement (31, 51; 122, 125) parallel zur ersten oder zweiten Erstreckungsrichtung (e1, e2) erstreckt.

2. Optische Positionsmesseinrichtung nach Anspruch 1, wobei pro Retroreflektorelement (21; 121; 1121; 1121'; 22; 122; 1122; 1122') vier diffraktive Elemente (30.1 - 30.4, 60.1 - 60.4; 121.1, 121.2; 124.1, 124.2; 1130.1 - 1130.4) auf einer ersten Seite der Abtastplatte (20; 120; 1120; 1120') angeordnet sind, so dass ein von einem ersten Auftreffort (A1, B1) der zugehörigen Maßverkörperung (12; 112.1, 112.2; 1112.1, 1112.2; 13; 113; 1113) einfallendes Paar von Teilstrahlenbündeln zunächst erste und zweite diffraktive Elemente (30.1, 30.2, 60.1, 60.2; 121.1, 121.2; 1130.1, 1130.2) durchtritt und darüber jeweils eine Fokussierung und Ablenkung auf das Reflektorelement (31, 51; 122, 125) auf der gegenüberliegenden zweiten Seite der Abtastplatte (20; 120; 1120; 1120') erfährt, am Reflektorelement (31, 51; 122, 125) eine Rückreflexion der beiden Teilstrahlenbündel auf ein drittes und viertes diffraktives Element (30.3, 30.3, 60.3, 60.4; 124.1, 124.2; 1130.3, 1130.4) erfolgt, über die die durchtretenden Teilstrahlenbündel jeweils eine Kollimation und Ablenkung in Richtung eines zweiten Auftrefforts (A2, B2) auf der zugehörigen Maßverkörperung (12; 112.1, 112.2; 1112.1, 1112.2; 13; 113; 1113) erfahren.

3. Optische Positionsmesseinrichtung nach Anspruch 2, wobei die diffraktiven Elemente (30.1 - 30.4, 60.1 - 60.4; 121.1, 121.2; 124.1, 124.2; 1130.1 - 1130.4) als auf der ersten Seite der Abtastplatte (20; 120; 1120; 1120') angeordnete, lokal begrenzte Transmissionsgitter mit gekrümmten Gitterlinien ausgebildet sind.

4. Optische Positionsmesseinrichtung nach mindestens einem der vorhergehenden Ansprüche, wobei in die Abtastplatte (20; 120) ein drittes Retroreflektorelement (23; 123) integriert ist, welches sich parallel zur zweiten Erstreckungsrichtung (e2) erstreckt und über das Teilstrahlenbündel, die von der zweiten Maßverkörperung (13; 113) her darauf einfallen, eine Rückreflexion in Richtung der zweiten Maßverkörperung (13; 113) erfahren.

5. Optische Positionsmesseinrichtung nach Anspruch 1, wobei die erste und zweite Maßverkörperung (12; 112.1, 112.2; 1112.1, 1112.2; 13; 113; 1113) jeweils als Reflexionsgitter ausgebildet sind und die Teilungsbereiche (12.1, 12.2, 13.1, 13.2) der ersten und zweiten Maßverkörperung (12; 112.1, 112.2; 1112.1, 1112.2; 13; 113; 1113) senkrecht zueinander orientiert sind.

6. Optische Positionsmesseinrichtung nach Anspruch 5, wobei die erste und zweite Maßverkörperung überlagert miteinander in Form eines Kreuzgitters (1111) ausgebildet sind.

7. Optische Positionsmesseinrichtung nach mindestens einem der vorhergehenden Ansprüche, mit
- mindestens einem am Objekt (100; 1000) angeordneten Messreflektor (114.1, 114.2),
- mindestens einem, mit der Abtastplatte (120; 1120) mechanisch gekoppelten Strahlteilerelement (151), um ein darauf einfallendes Strahlenbündel in mindestens ein Messstrahlenbündel (M) und mindestens ein Referenzstrahlenbünde (R) aufzuspalten, so dass über das in Richtung der Messreflektoren (114.1, 114.2) propagierende Messstrahlenbündel (M) mindestens ein Interferometer-Messarm (My1, My2, My3) ausgebildet wird und über das Referenzstrahlenbündel (R) ein interferometer-Referenzarm,
- einer Interferometer-Detektoranordnung (160), über die aus überlagerten Mess- und Referenzstrahlenbündeln (M, R) Positionssignale bezüglich der Bewegung des Objekts (100; 1000) entlang einer dritten Bewegungsrichtung (y) erzeugbar sind, die senkrecht zur ersten und zweiten Bewegungsrichtung (x, z) orientiert ist.

8. Optische Positionsmesseinrichtung nach Anspruch 7, wobei das Strahlteilerelement (151), mehrere diffraktive Elemente (124.1, 124.2) und mindestens ein Reflektorelement (125) in die Abtastplatte (120; 1120) integriert ausgebildet sind, so dass das Referenzstrahlenbündel (R) zwischen der Aufspaltung am Strahlteilerelement (151) und der Überlagerung mit dem Messstrahlenbündel (M) ausschließlich in der Abtastplatte (120; 1120) propagiert.

9. Optische Positionsmesseinrichtung nach Anspruch 7, wobei der Messreflektor (114.1, 114.2) ein diffraktives Element (115) und ein Reflektorelement (116) umfasst.

10. Optische Positionsmesseinrichtung nach Anspruch 7, wobei mindestens drei symmetrisch zueinander angeordnete Messstrahlenbündel in Richtung des mindestens einen Messreflektors (114.1, 114.2) propagieren.

11. Optische Positionsmesseinrichtung nach mindestens einem der vorhergehenden Ansprüche, wobei eine einzige Lichtquelle (24) mindestens zur Abtastung der ersten und zweiten Maßverkörperung (12; 112.1, 112.2; 1112.1, 1112.2; 13; 113; 1113) genutzt wird.

12. Optische Positionsmesseinrichtung nach mindestens einem der vorhergehenden Ansprüche, wobei die erste Bewegungsrichtung (x) parallel zur ersten Erstreckungsrichtung (e1) orientiert ist und die zweite Bewegungsrichtung (z) parallel zur zweiten Erstreckungsrichtung (e2) orientiert ist.

13. Optische Positionsmesseinrichtung nach Anspruch 1 und 7, wobei über mindestens ein Aufspaltelement (1170) zumindest ein Teil der Teilstrahlenbündel auf ein positionsempfindliches elektrooptisches Detektorelement (1173.1, 1173.2) lenkbar ist und über die Detektion des Auftreffortes der darauf einfallenden Teilstrahlenbündel die Position des Objekts (100; 1000) bei einer Rotation um mindestens eine Bewegungsrichtung (x, z, y) bestimmbar ist.

14. Optische Positionsmesseinrichtung nach Anspruch 13, wobei die erste Bewegungsrichtung (x) einen Winkel von 45° zur ersten Erstreckungsrichtung (e1) einnimmt und die zweite Bewegungsrichtung (z) einen Winkel von 45° zur zweiten Erstreckungsrichtung (e2) einnimmt.

## Claims

1. Optical position measuring device for acquiring the position of an object (10; 100; 1000; 1000') in multiple degrees of freedom, wherein the object (10; 100; 1000; 1000') is arranged so it is movable at least along a first movement direction (x) and along a second movement direction (z), having
- at least one light source (24; 150),
- at least one first measuring standard (12; 112.1, 112.2; 1112.1, 1112.2) arranged on the object (10; 100; 1000; 1000'), which extends along a first extension direction (e1) and comprises indexing regions (12.1, 12.2) arranged periodically along the first extension direction (e1),
- at least one second measuring standard (13; 113; 1113) arranged on the object (10; 100; 1000; 1000'), which extends along a second extension direction (e2) and comprises indexing regions (13.1, 13.2) arranged periodically along the second extension direction (e2),
- a scanning plate (20; 120; 1120; 1120'), in which at least first and second retroreflector elements (21; 121; 1121; 1121'; 22; 122; 1122; 1122') are integrated, wherein the longitudinal extension direction of the first retroreflector element (21; 121; 1121; 1121') extends in parallel to the first extension direction (e1) and the longitudinal extension direction of the second retroreflector element (22; 122; 1122; 1122') extends in parallel to the second extension direction (e2) and via which partial beams which are incident thereon from the first and second measuring standard (12; 112.1, 112.2; 1112.1, 1112.2; 13; 113; 1113) experience a reflection back in the direction of the respective measuring standard (12; 112.1, 112.2; 1112.1, 1112.2; 13; 113; 1113) ,
- a detector arrangement (160), via which at least position signals with respect to the movement of the object (10; 100; 1000; 1000') along the first and the second movement directions (x, z) can be guaranteed from superimposed partial beams,
- and wherein the retroreflector elements (21; 121; 1121; 1121'; 22; 122; 1122; 1122') are formed as diffractive retroreflector elements, having
- multiple diffractive elements (30.1 - 30.4; 121.1, 121.2; 124.1, 124.2; 1130.1 - 1130.4) arranged on a first side of the scanning plate (20; 120; 1120; 1120') and
- at least one reflector element (31, 51; 122, 125) arranged on the opposing, second side of the scanning plate (20; 120; 1120; 1120') and the reflective side of which is oriented in the direction of the diffractive elements (30.1 - 30.4; 121.1, 121.2; 124.1, 124.2; 1130.1 - 1130.4), wherein the reflector element (31, 51; 122, 125) extends in parallel to the first or second extension direction (e1, e2).

2. Optical position measuring device according to Claim 1, wherein four diffractive elements (30.1 - 30.4, 60.1 - 60.4; 121.1, 121.2; 124.1, 124.2; 1130.1 - 1130.4) are arranged on a first side of the scanning plate (20; 120; 1120; 1120') per retroreflector element (21; 121; 1121; 1121'; 22; 122; 1122; 1122'), so that a pair of partial beams incident from a first incidence location (A1, B1) of the associated measuring standard (12; 112.1, 112.2; 1112.1, 1112.2; 13; 113; 1113) firstly pass through first and second diffractive elements (30.1, 30.2, 60.1, 60.2; 121.1, 121.2; 1130.1, 1130.2) and in each case experience a focusing and deflection via these elements on the reflector element (31, 51; 122, 125) on the opposing second side of the scanning plate (20; 120; 1120; 1120'), a back reflection of the two partial beams takes place on the reflector element (31, 51; 122, 125) onto a third and fourth diffractive element (30.3, 30.3, 60.3, 60.4; 124.1, 124.2; 1130.3, 1130.4), via which the passing partial beams each experience a collimation and deflection in the direction of a second incidence location (A2, B2) on the associated measuring standard (12; 112.1, 112.2; 1112.1, 1112.2; 13; 113; 1113).

3. Optical position measuring device according to Claim 2, wherein the diffractive elements (30.1 30.4, 60.1 - 60.4; 121.1, 121.2; 124.1, 124.2; 1130.1 - 1130.4) are formed as locally delimited transmission gratings having curved grating lines arranged on the first side of the scanning plate (20; 120; 1120; 1120'),

4. Optical position measuring device according to at least one of the preceding claims, wherein a third retroreflector element (23; 123) is integrated into the scanning plate (20; 120), which extends in parallel to the second extension direction (e2) and via which partial beams which are incident thereon from the second measuring standard (13; 113) experience a reflection back in the direction of the second measuring standard (13; 113).

5. Optical position measuring device according to Claim 1, wherein the first and second measuring standards (12; 112.1, 112.2; 1112.1, 1112.2; 13; 113; 1113) are each formed as reflection gratings and the indexing regions (12.1, 12.2, 13.1, 13.2) of the first and second measuring standards (12; 112.1, 112.2; 1112.1, 1112.2; 13; 113; 1113) are oriented perpendicularly to one another.

6. Optical position measuring device according to Claim 5. wherein the first and second measuring standards are formed superimposed with one another in the form of a cross grating (1111).

7. Optical position measuring device according to at least one of the preceding claims, having
- at least one measurement reflector (114.1, 114.2) arranged on the object (100; 1000),
- at least one beam splitter element (151) mechanically coupled to the scanning plate (120; 1120), in order to split a beam incident thereon into at least one measurement beam (M) and at least one reference beam (R), so that at least one interferometer measurement arm (My1, My2, My3) is formed via the measurement beam (M) propagating in the direction of the measurement reflectors (114.1, 114.2) and an interferometer reference arm is formed via the reference beam (R),
- an interferometer detector arrangement (160), via which position signals with respect to the movement of the object (100; 1000) along a third movement direction (y), which is oriented perpendicularly to the first and second movement directions (x, z), can be generated from superimposed measurement and reference beams.

8. Optical position measuring device according to Claim 7, wherein the beam splitter element (151), multiple diffractive elements (124.1, 124.2), and at least one reflector element (125) are formed integrated into the scanning plate (120; 1120), so that the reference beam (R) exclusively propagates in the scanning plate (120; 1120) between the splitting on the beam splitter element (151) and the superposition with the measurement beam (M) .

9. Optical position measuring device according to Claim 7, wherein the measurement reflector (114.1, 114.2) comprises a diffractive element (115) and a reflector element (116).

10. Optical position measuring device according to Claim 7, wherein at least three measurement beams arranged symmetrically to one another propagate in the direction of the at least one measurement reflector (114.1, 114.2).

11. Optical position measuring device according to at least one of the preceding claims, wherein a single light source (24) is used at least for scanning the first and second measuring standard (12; 112.1, 112.2; 1112.1, 1112,2; 13; 1113).

12. Optical position measuring device according to at least one of the preceding claims, wherein the first movement direction (x) is oriented in parallel to the first extension direction (el) and the second movement direction (z) is oriented in parallel to the second extension direction (e2).

13. Optical position measuring device according to Claims 1 and 7, wherein at least a part of the partial beams can be deflected onto a position-sensitive electro-optical detector element (1173.1, 1173.2) via at least one splitting element (1170) and the position of the object (100; 1000) during a rotation around at least one movement direction (x, y, z) is determinable via the detection of the incidence location of the partial beams incident thereon.

14. Optical position measuring device according to Claim 13, wherein the first movement direction (x) assumes an angle of 45° to the first extension direction (e1) and the second movement direction (z) assumes an angle of 45° to the second extension direction (e2).

## Revendications

1. Dispositif optique de mesure de la position permettant de détecter la position d'un objet (10 ; 100 ; 1000 ; 1000') selon plusieurs degrés de liberté, dans lequel l'objet (10 ; 100 ; 1000 ; 1000') est disposé de manière mobile au moins le long d'une première direction de mouvement (x) et le long d'une deuxième direction de mouvement (z), comprenant
- au moins une source lumineuse (24 ; 150),
- au moins une première mesure matérialisée (12 ; 112.1, 112.2 ; 1112.1, 1112.2) disposée sur l'objet (10 ; 100 ; 1000 ; 1000'), qui s'étend le long d'une première direction d'extension (e1) et comprend des zones de division (12.1, 12.2) disposées périodiquement le long de la première direction d'extension (e1),
- au moins une deuxième mesure matérialisée (13 ; 113 ; 1113) disposée sur l'objet (10 ; 100 ; 1000 ; 1000'), qui s'étend le long d'une deuxième direction d'extension (e2) et qui comprend des zones de division (13.1, 13.2) disposées périodiquement le long de la deuxième direction d'extension (e2),
- une plaque de balayage (20 ; 120 ; 1120 ; 1120') dans laquelle sont intégrés au moins un premier et un deuxième éléments rétroréflecteurs (21 ; 121 ; 1121 ; 1121' ; 22 ; 122 ; 1122 ; 1122'), dans lequel la direction d'extension longitudinale du premier élément rétroréflecteur (21 ; 121 ; 1121 ; 1121') s'étend parallèlement à la première direction d'extension (e1) et la direction d'extension longitudinale du deuxième élément rétroréflecteur (22 ; 122 ; 1122 ; 1122') s'étend parallèlement à la deuxième direction d'extension (e2), et par l'intermédiaire de laquelle des faisceaux partiels qui sont incidents sur celle-ci en provenance des première et deuxième mesures matérialisées (12 ; 112.1, 112.2 ; 1112.1, 1112.2 ; 13 ; 113 ; 1113) sont soumis à une rétroréflexion dans la direction de la mesure matérialisée respective (12 ; 112.1, 112.2 ; 1112.1, 1112.2 ; 13 ; 113 ; 1113),
- un dispositif détecteur (160) au moyen duquel il est possible de générer à partir de faisceaux partiels superposés au moins des signaux de position par rapport au mouvement de l'objet (10 ; 100 ; 1000 ; 1000') le long des première et deuxième directions de mouvement (x, z),
- et dans lequel les éléments rétroréflecteurs (21 ; 121 ; 1121 ; 1121' ; 22 ; 122 ; 1122 ; 1122') sont réalisés sous la forme d'éléments rétroréflecteurs diffractants, comprenant
- plusieurs éléments diftractants (30.1 - 30.4 ; 121.1, 121.2 ; 124.1, 124.2 ; 1130.1 - 1130,4) disposés sur une première face de la plaque de balayage (20 ; 120 ; 1120 ; 1120') et
- au moins un élément réflecteur (31, 51 ; 122, 125) qui est disposé sur la deuxième face opposée de la plaque de balayage (20 ; 120 ; 1120 ; 1120') et dont la face réfléchissante est orientée dans la direction des éléments diffractants (30.1 - 30.4 ; 121.1, 121.2 ; 124.1, 124.2 ; 1130.1 - 1130.4), dans lequel l'élément réflecteur (31, 51 ; 122, 125) s'étend parallèlement à la première ou à la deuxième direction d'extension (e1, e2) .

2. Dispositif optique de mesure de la position selon la revendication 1, dans lequel quatre éléments diffractants (30.1 - 30.4, 60.1 - 60.4 ; 121.1, 121.2 ; 124.1, 124.2 ; 1130.1 - 1130.4) par élément rétroréflecteur (21 ; 121 ; 1121 ; 1121' ; 22 ; 122 ; 1122 ; 1122') sont disposés sur une première face de la plaque de balayage (20 ; 120 ; 1120 ; 1120'), de manière à ce qu'une paire de faisceaux partiels incidents en provenance d'un premier point d'incidence (A1, B1) de la mesure matérialisée associée (12 ; 112.1, 112.2 ; 1112.1, 1112.2 ; 13 ; 113 ; 1113) passe d'abord par des premiers et deuxièmes éléments diffractants (30.1, 30.2, 60.1, 60.2 ; 121.1, 121.2 ; 1130.1, 1130.2) et soit en outre respectivement soumise à une focalisation et à une déviation sur l'élément réflecteur (31, 51 ; 122, 125) vers la deuxième face opposée de la plaque de balayage (20 ; 120 ; 1120 ; 1120'), une réflexion des deux faisceaux partiels se produit au niveau de l'élément réflecteur (31, 51 ; 122, 125) vers un troisième et un quatrième élément diffractant (30.3, 30.3, 60.3, 60.4 ; 124.1, 124.2 ; 1130.3, 1130.4), par l'intermédiaire de laquelle les faisceaux partiels transmis sont respectivement soumis à une collimation et à une déviation dans la direction d'un deuxième point d'incidence (A2, B2) vers la mesure matérialisée associée (12 ; 112.1, 112.2 ; 1112.1, 1112.2 ; 13 ; 113 ; 1113).

3. Dispositif optique de mesure de la position selon la revendication 2, dans lequel les éléments diffractants (30.1 - 30.4, 60.1 - 60.4 ; 121.1, 121.2 ; 124.1, 124.2 ; 1130.1 - 1130.4) sont réalisés sous la forme de réseaux de transmission localement délimités présentant des lignes de réseau courbes agencées sur la première face de la plaque de balayage (20 ; 120 ; 1120 ; 1120').

4. Dispositif optique de mesure de la position selon au moins l'une des revendications précédentes, dans lequel un troisième élément rétroréflecteur (23 ; 123) est intégré dans la plaque de balayage (20 ; 120) et s'étend parallèlement à la deuxième direction d'extension (e2), par l'intermédiaire duquel des faisceaux partiels qui sont incidents sur celui-ci en provenance de la deuxième mesure matérialisée (13 ; 113) sont réfléchis dans la direction de la deuxième mesure matérialisée (13 ; 113).

5. Dispositif optique de mesure de la position selon la revendication 1, dans lequel les première et deuxième mesures matérialisées (12 ; 112.1, 112.2 ; 1112.1, 1112.2 ; 13 ; 113 ; 1113) sont respectivement réalisées sous la forme de grilles de réflexion et les zones de division (12.1, 12.2, 13.1, 13.2) des première et deuxième mesures matérialisées (12 ; 112.1, 112.2 ; 1112.1, 1112.2 ; 13 ; 113 ; 1113) sont orientées perpendiculairement les unes aux autres.

6. Dispositif optique de mesure de la position selon la revendication 5, dans lequel les première et deuxième mesures matérialisées sont réalisées de manière superposée l'une à l'autre sous la forme d'une grille croisée (1111).

7. Dispositif optique de mesure de la position selon au moins l'une des revendications précédentes, comprenant
- au moins un réflecteur de mesure (114.1, 114.2) disposé sur l'objet (100 ; 1000),
- au moins un élément diviseur de faisceau (151) couplé mécaniquement à la plaque de balayage (120 ; 1120) pour diviser un faisceau incident sur celle-ci en au moins un faisceau de mesure (M) et au moins un faisceau de référence (R), de manière à ce qu'au moins un bras de mesure d'interféromètre (My1, My2, My3) soit formé par le faisceau de mesure (M) se propageant dans la direction des réflecteurs de mesure (114.1, 114.2) et qu'un bras de référence d'interféromètre soit formé par le faisceau de référence (R),
- un dispositif détecteur à interféromètre (160) par l'intermédiaire duquel des signaux de position peuvent être générés à partir de faisceaux de mesure et de référence superposés (M, R) par rapport au mouvement de l'objet (100 ; 1000) le long d'une troisième direction de mouvement (y) qui est orientée perpendiculairement aux première et deuxième directions de mouvement (x, z).

8. Dispositif optique de mesure de la position selon la revendication 7, dans lequel l'élément diviseur de faisceau (151), plusieurs éléments diffractants (124.1, 124.2) et au moins un élément réflecteur (125) sont réalisés de manière à être intégrés dans la plaque de balayage (120 ; 1120), de manière à ce que le faisceau de référence (R) se propage exclusivement dans la plaque de balayage (120 ; 1120) entre la division au niveau de l'élément diviseur de faisceau (151) et la superposition avec le faisceau de mesure (M).

9. Dispositif optique de mesure de la position selon la revendication 7, dans lequel le réflecteur de mesure (114.1, 114.2) comprend un élément diffractant (115) et un élément réflecteur (116).

10. Dispositif optique de mesure de la position selon la revendication 7, dans lequel au moins trois faisceaux de mesure disposés symétriquement les uns par rapport aux autres se propagent dans la direction dudit au moins un réflecteur de mesure (114.1, 114.2).

11. Dispositif optique de mesure de la position selon au moins l'une des revendications précédentes, dans lequel une source lumineuse (24) unique est utilisée au moins pour le balayage des première et deuxième mesures matérialisées (12 ; 112.1, 112.2 ; 1112.1, 1112.2 ; 13 ; 113 ; 1113).

12. Dispositif optique de mesure de la position selon au moins l'une des revendications précédentes, dans lequel la première direction de mouvement (x) est orientée parallèlement à la première direction d'extension (e1) et la deuxième direction de mouvement (z) est orientée parallèlement à la deuxième direction d'extension (e2).

13. Dispositif optique de mesure de la position selon les revendications 1 et 7, dans lequel au moins une partie des faisceaux partiels peut être dirigée par au moins un élément diviseur (1170) vers un élément détecteur électro-optique sensible à la position (1173.1, 1173.2) et la position de l'objet (100 ; 1000) peut être déterminée lors d'une rotation autour d'au moins une direction de mouvement (x, z, y) par la détection du point d'incidence des faisceaux partiels qui sont incidents sur celui-ci.

14. Dispositif optique de mesure de la position selon la revendication 13, dans lequel la première direction de mouvement (x) forme un angle de 45° par rapport à la première direction d'extension (e1) et la deuxième direction de mouvement (z) forme un angle de 45° par rapport à la deuxième direction d'extension (e2).
